(19) **Europäisches Patentamt European Patent Office Office européen des brevets**

(11) **EP 2 365 302 B1**

(12) **EUROPÄISCHE PATENTSCHRIFT**

(45) Veröffentlichungstag und Bekanntmachung des Hinweises auf die Patenterteilung:
**23.05.2012 Patentblatt 2012/21**

(51) Int Cl.:
***G01F 23/284*** *(2006.01)*

(21) Anmeldenummer: **10154636.4**

(22) Anmeldetag: **25.02.2010**

(54) **Messung der Entfernung zu mindestens einer ersten Grenzfläche**

Measurement of the distance to at least one initial boundary area

Mesure de la distance par rapport à, au moins, une première surface limite

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**14.09.2011 Patentblatt 2011/37**

(73) Patentinhaber: **SICK AG**
**79183 Waldkirch (DE)**

(72) Erfinder:
• **Weber, Thomas**
**77960 Seelbach (DE)**
• **Romero, Andrés**
**76137 Karlsruhe (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A2- 0 780 665     WO-A1-00/43739**
**GB-A- 2 153 616**

**Beschreibung**

Die Erfindung betrifft ein Verfahren zur Messung der Entfernung zu mindestens einer ersten Grenzfläche und zur Bestimmung der relativen Dielektrizitätskonstante eines die erste Grenzfläche bildenden ersten Mediums nach dem Oberbegriff von Anspruch 1 sowie einen Sensor, der zur Ausführung des Verfahrens ausgebildet ist, nach dem Oberbegriff von Anspruch 15.

Es ist aus vielen Anwendungen bekannt, den Abstand zu einer Grenzfläche aus der Laufzeit eines Mikrowellensignals zu bestimmen. Eine Möglichkeit ist, das Signal frei abzustrahlen, wie dies beim Radar geschieht. Wegen der unkontrollierten Wellenausbreitung wird häufig das Verfahren der Zeitbereichsreflektometrie (TDR, Time Domain Reflectometry) bevorzugt. Es basiert auf der Bestimmung von Laufzeiten eines elektromagnetischen Signals, um den Abstand einer Diskontinuität des Leitungswellenwiderstandes wie etwa eines Kabelbruchs oder einer Grenzfläche zwischen zwei Medien zu ermitteln. Der Unterschied zum Radar besteht darin, dass die elektromagnetischen Wellen nicht ins Freie abgestrahlt, sondern entlang eines Leiters geführt werden.

Eine der ältesten Anwendungen des TDR-Prinzips ist die Lokalisierung von Brüchen in Überseeleitungen. Man kann TDR ebenso nutzen, um Füllstände in einem Behälter zu bestimmen, Leitungen in elektronischen Schaltungen zu testen oder um für Bauplanung oder Landwirtschaft den Feuchtigkeitsgehalt des Erdbodens in bestimmten Tiefen zu bestimmen. Für Anwendungen zur Füllstandsmessung ist der Leiter als Monosonde oder Koaxialsonde ausgebildet, welche senkrecht oder schräg in den Tank eingeführt wird und möglichst dicht bis zum Boden reicht, um den vollen Messbereich abzudecken.

Bei einer TDR-Messung wird ein sehr kurzer elektrischer Sendeimpuls in den Leiter eingespeist und durchläuft ihn in Richtung des gegenüberliegenden Endes. Trifft der Impuls auf eine Störstelle, was gleichbedeutend mit einer Änderungen des örtlichen Wellenwiderstand ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen. Ein wichtiges Beispiel einer Störstelle ist eine Grenzfläche, welche zwei räumliche Bereiche mit unterschiedlichen physikalischen oder chemischen Eigenschaften trennt, wie eine Grenzfläche zwischen zwei Medien.

Um den Empfangszeitpunkt genau bestimmen zu können, wird der Verlauf des Empfangssignals abgetastet und einer digitalen Auswertung zugeführt. Dabei werden lokale Extremstellen im Signalverlauf gesucht und deren zeitliche Lage einer Reflexion an einer Grenzfläche zugeordnet.

Schwierigkeiten entstehen, wenn mehrere Grenzflächen vorhanden sind, wie dies beispielsweise bei mehreren Medien in einem Behälter der Fall ist. Dabei kann es sich beispielsweise um Wasser handeln, das sich am Boden eines Öltanks ansammelt, oder um Schaum, der sich an der Oberfläche einer Flüssigkeit bildet. Prinzipiell entstehen zwar an jeder Grenzfläche Reflexionen, und die jeweiligen Laufzeiten bis zu jeder dieser Grenzfläche lassen sich auch in eine Entfernung umrechnen. Dazu sind aber zwei Voraussetzungen zu erfüllen: Die relative Dielektrizitätskonstante der jeweiligen Medien muss bekannt sein, weil sie die Laufzeit und damit die Umrechnung in eine Entfernung beeinflusst, und es muss die zeitliche Lage der Reflexionssignale in dem Signalverlauf aufgelöst werden. Ersteres ist unflexibel, und darüber hinaus lässt sich beispielsweise im Falle von Schaum die relative Dielektrizitätskonstante gar nicht immer vorab angeben, da sie von der Zusammensetzung des Schaums abhängt. Letzteres ist besonders bei dünnen Schichtungen der Medien problematisch, weil sich dort die Reflexionssignale überlagern können. Außerdem nimmt die Energie der Reflexionssignale mit jeder Grenzfläche weiter ab, so dass sie sich weniger aus dem Rauschpegel erheben.

Ein herkömmlicher Auswertealgorithmus, der nur für die Erkennung einzelner Reflexionssignale ausgelegt ist, kann diese überlagerten Reflexionssignale nicht trennen. Da die Kurvenform von der erwarteten Kurvenform einzelner Reflexionssignale abweicht, kann sogar der Fall auftreten, dass ein überlagertes Reflexionssignal gar nicht detektiert wird. Jedenfalls wird ein solcher Algorithmus die zwei Grenzflächen nicht erkennen und wegen der abweichenden Kurvenform die zeitliche Lage ungenau bestimmen. Die Folge sind unvollständige Informationen über die Grenzflächen, ungenaue Messergebnisse oder sogar das Fehlen jeglicher Messwerte bei Nichterkennung einer Grenzfläche.

Aus der US 6,724,197 B2 ist ein Füllstandssensor bekannt, mit dem der Füllstand des unteren von zwei aufeinander geschichteten Medien bestimmbar ist. Dazu ist aber eine besondere und aufwändige Sondenform erforderlich. Zudem muss die Dielektrizitätskonstante des unteren Mediums bekannt sein beziehungsweise anfänglich bei einem bekannten Füllstand des unteren Mediums gemessen werden.

Die US 5,723,979 A offenbart einen TDR-Füllstandssensor zur Messung in Flüssigkeitsmischungen. Beschrieben wird lediglich eine Sondenform. Ein Auswertungsverfahren, erst recht eine Bestimmung der Entfernung zu mehreren Grenzschichten, ist nicht beschrieben.

In der US 6,445,192 B1 werden Zwillingspulse an doppelten Grenzflächen von einem TDR-Sensor anhand des Steigungsverhaltens der Signalform aufgetrennt. Zu der Frage der relativen Dielektrizitätskonstanten wird dabei gar nicht diskutiert. Ohne deren Kenntnis ist aber der Abstand der beiden Grenzflächen untereinander gar nicht bestimmbar. Somit kann die US 6,445,192 B1 möglicherweise die Lage der ersten Grenzfläche genauer bestimmen oder überhaupt feststellen, dass es eine zweite Grenzfläche gibt, nicht aber deren Entfernung messen.

In der EP 2 154 495 A2 wird in einer u-förmigen Doppelsonde ein zweites Reflexionssignal ausgewertet. Dieses zweite Reflexionssignal hat seinen Ursprung aber nicht von einer zweiten Grenzfläche, sondern entsteht auf dem Rückweg des Signals längs der u-Form an der Unterseite derselben, einzigen Grenzfläche.

Schließlich ist ohne Zusammenhang mit Zeitbereichsreflektometrie beispielsweise aus der US 5,140,236 A oder der US 2008-0143583 A1 bekannt, diskrete Messreihen mit Spline-Funktionen zu interpolieren.

Viele herkömmliche Verfahren sind somit gar nicht in der Lage, mit mehreren Grenzflächen umzugehen, da nur eine Extremstelle in dem Signalverlauf erwartet wird. Soweit der Stand der Technik überhaupt Aussagen über eine weitere Grenzfläche machen kann, sind zunächst kompliziertere Sondenformen notwendig, und dennoch lässt sich nur mit zusätzlichem Vorwissen die Entfernung der weiteren Grenzfläche bestimmen.

Es ist daher Aufgabe der Erfindung, ein verbessertes Verfahren zur Messung der Entfernung von Grenzflächen anzugeben, mit dem mehrere Grenzflächen auflösbar sind.

Diese Aufgabe wird durch ein Verfahren zur Messung der Entfernung zu mindestens einer ersten Grenzfläche sowie zur Bestimmung der relativen Dielektrizitätskonstante eines die erste Grenzfläche bildenden ersten Mediums nach Anspruch 1 sowie einen Sensor nach Anspruch 15 gelöst, der für die Ausführung des Verfahrens ausgebildet ist. Die Erfindung geht dabei von dem Grundgedanken aus, das jeweils oberste unbekannte Medium und dessen Grenzfläche auszumessen und die so gewonnene Information zu verwenden, um die weiteren Medien und Grenzflächen zu bestimmen. Dabei wird anders als herkömmlich nicht nur ein einziges besonders ausgeprägtes Reflexionssignal gesucht, sondern auch der übrige Signalverlauf ausgewertet.

Nach der erfindungsgemäßen Lösung wird durch einen Vergleich zweier Messungen der relativen Dielektrizitätskonstante, nämlich einmal vom Sondenanfang bis zu der ersten Grenzfläche und einmal von der ersten Grenzfläche bis zum Sondenende, festgestellt, ob es noch weitere Medien und damit weitere Grenzflächen gibt. Die Laufzeit des Signals unterhalb der ersten Grenzschicht wird nämlich davon beeinflusst, ob sich dort nur das erste Medium oder noch weitere Medien mit anderer relativer Dielektrizitätskonstante befinden. Stimmen daher die beiden Messungen über eine Toleranz hinaus nicht überein, so wird auf die Anwesenheit eines weiteren Mediums geschlossen. Liefern umgekehrt beide Messungen innerhalb der Toleranzen denselben Wert der relativen Dielektrizitätskonstanten, so gibt es nur ein Medium der somit zuverlässig bestimmten Dielektrizitätskonstanten.

Die Erfindung hat den Vorteil, dass keinerlei Vorwissen über die Grenzflächen und die Medien erforderlich ist. Das Verfahren ist in der Lage, eine prinzipiell beliebige Anzahl von unbekannten Medien in beliebiger Schichtung und Schichtdicke zuverlässig aufzulösen. Dabei wird außerdem noch eine höhere Messgenauigkeit erreicht. Da zugleich die relative Dielektrizitätskonstante der Medien bestimmt wird, kann das Verfahren zusätzlich eine Aussage über die Art der Medien treffen, sofern eine Tabelle hinterlegt wird, die den relativen Dielektrizitätskonstanten Materialien zuordnet.

Eine bevorzugte Anwendung ist die Messung von Füllständen in einem Behälter mit einem Medium oder mehreren übereinander geschichteten Medien. Dabei zeigt das Beispiel von Schaum, dass vorab nicht bekannt ist, ob und inwieweit eine zusätzliche Schicht eines weiteren Mediums und damit eine weitere Grenzfläche entsteht. Genaugenommen bildet nicht ein Medium allein eine Grenzfläche, sondern die Grenzfläche trennt das jeweilige Medium von einem darüber liegenden Medium, wobei die Grenzfläche zugleich die untere Fläche dieses darüber liegenden Mediums ist. Da die Zuordnung aber auch durch eines der Medien eindeutig ist, wenn man die Grenzfläche jeweils als die zu dem Sender nähere Grenzfläche definiert, wird das jeweilige darüber liegende Medium zur sprachlichen Vereinfachung meist nicht erwähnt.

Die bevorzugte Signalform sind kurze Sendepulse. Denkbar sind aber auch andere Signalformen, die eine gute zeitliche Auflösung zulassen, indem sie beispielsweise mindestens eine steile Flanke aufweisen. Üblicherweise werden Mikrowellensignale verwendet.

Die relative Dielektrizitätskonstante wird bevorzugt bei dem ersten Mal unter Verwendung eines Reflexionskoeffizienten $r^{M1} = \dfrac{A_{refl}^{M1}}{A_{start}}$ nach der Rechenvorschrift $\varepsilon_{r1}^{M1} = \left(\dfrac{1 - r^{M1}}{1 + r^{M1}}\right)^2$ und/oder bei dem zweiten Mal nach der

Rechenvorschrift $\varepsilon_{r2}^{M1} = \left(\dfrac{c\Delta t_{end}^{M1}}{2d_{end}^{M1}}\right)^2$ bestimmt. So wird die Amplitudeninformation einerseits und die Laufzeiten jenseits der ersten Grenzfläche andererseits quantitativ ausgewertet.

Die Entfernung $d_{start}^{M2}$ zu einer zweiten Grenzfläche und eine relative Dielektrizitätskonstante $\varepsilon_r^{M2}$ eines die zweite Grenzfläche bildenden zweiten Mediums wird bevorzugt auf Basis der Entfernung $d_{start}^{M1}$ zu der ersten Grenzfläche und der relativen Dielektrizitätskonstanten $\varepsilon_{r1}^{M1}$ des ersten Mediums ein erstes Mal durch Vergleich der Amplitude $A_{refl}^{M2}$ des Reflexionssignals an der zweiten Grenzfläche mit der Amplitude $A_{refl}^{M1}$ des Reflexionssignals an der ersten Grenzfläche und der Referenzamplitude $A_{start}$, insbesondere unter Verwendung eines Reflexionskoeffizienten

$$r^{M2} = \frac{A_{refl}^{M2}}{A_{start}(r^{M1}+1)^2}$$ nach der Rechenvorschrift $\varepsilon_{r1}^{M2} = \left(\frac{1-r^{M2}}{1+r^{M2}}\right)^2 \varepsilon_{r1}^{M1}$, und ein zweites Mal anhand der

Signallaufzeit $\Delta t_{end}^{M2}$ und Entfernung $d_{end}^{M2} = L - d_{start}^{M2}$ zwischen Sondenende und zweiter Grenzfläche bestimmt, insbesondere nach der Rechenvorschrift $\varepsilon_{r2}^{M2} = \left(\frac{c\Delta t_{end}^{M2}}{2d_{end}^{M2}}\right)^2$. Somit wird die Entfernung zu einer zweiten Grenzschicht eines zweiten Mediums ermittelt, das mit dem ersten Medium geschichtet angeordnet ist. Analog dem Vorgehen bei der ersten Grenzfläche können die durch beide Messungen bestimmten Werte der relativen Dielektrizitätskonstante $\varepsilon_r^{M2}$ verglichen werden, um zu entscheiden, ob sich unterhalb der zweiten Grenzfläche ein weiteres Medium mit einer weiteren Grenzfläche befindet.

Die Entfernung $d_{start}^{Mn}$ zu einer n-ten Grenzfläche und eine relative Dielektrizitätskonstante $\varepsilon_r^{Mn}$ eines die n-te Grenzfläche bildenden n-ten Mediums wird bevorzugt auf Basis der Entfernung $d_{start}^{M(n-1)}$ zu der n-1-ten Grenzfläche und der relativen Dielektrizitätskonstanten $\varepsilon_{r1}^{M(n-1)}$ des n-1-ten Mediums ein erstes Mal durch Vergleich der Amplitude

$A_{refl}^{Mn}$ des Reflexionssignals an einer n-ten Grenzfläche des n-ten Mediums mit den Amplituden $A_{refl}^{M1}$ bis $A_{refl}^{M(n-1)}$ der Reflexionssignale an der ersten bis n-1-ten Grenzfläche und der Referenzamplitude $A_{start}$, insbesondere unter

Verwendung eines Reflexionskoeffizienten $r^{Mn} = \dfrac{A_{refl}^{Mn} r^{M(n-1)}}{A_{start} \prod\limits_{i=1}^{n-1}(r^{Mi}+1)^2 r^{Mi}}$ nach der Rechenvorschrift

$\varepsilon_{r1}^{Mn} = \left(\frac{1-r^{Mn}}{1+r^{Mn}}\right)^2 \varepsilon_{r1}^{M(n-1)}$, und ein zweites Mal anhand der Signallaufzeit $\Delta t_{end}^{Mn}$ und Entfernung

$d_{end}^{Mn} = L - d_{start}^{Mn}$ zwischen Sondenende und n-ter Grenzfläche bestimmt, insbesondere nach der Rechenvorschrift

$\varepsilon_{r2}^{M2} = \left(\frac{c\Delta t_{end}^{Mn}}{2d_{end}^{Mn}}\right)^2$. Mit dieser Verallgemeinerung lässt sich das Verfahren auf eine beliebige Anzahl von Grenzflächen und geschichteten Medien erweitern.

Vorteilhafterweise werden keine weiteren Grenzflächen gesucht, wenn mindestens eines der folgenden Abbruchkriterien erfüllt ist:

- es wurde eine Maximalanzahl von Grenzflächen gefunden,
- die größte erkannte und noch keiner Grenzfläche zugeordnete Amplitude in dem Signalverlauf unterschreitet eine Amplitudenschwelle,
- der Signalverlauf innerhalb eines vorgegebenen Zeitbereich ist vollständig ausgewertet,
- die von dem Beginn der Sonde bis zu der zuletzt ausgewerteten Grenzfläche aufintegrierte Energie des Signalverlaufs überschreitet eine Energieschwelle.

Der Signalverlauf wird auf hinreichend ausgeprägte Extremstellen untersucht, deren Anzahl unmittelbar mit der Anzahl von auflösbaren Grenzschichten korrespondiert. Da aber nach dem Passieren mehrerer Grenzschichten ein weiteres Reflexionssignal nicht mehr in allen Fällen eindeutig von einem Rauschausschlag unterscheidbar ist, werden hiermit weitere Kriterien angegeben, die einerseits von vorne herein die messbare Anzahl von Grenzflächen beschränken oder die abschätzen, ob überhaupt noch ein hinreichendes Signal/Rauschverhältnis für weitere auflösbare Grenzflächen gegeben ist.

Der Signalverlauf des reflektierten Signals wird bevorzugt mit einer nichtlinearen Kennlinie verstärkt aufgezeichnet, bei der Eingangssignale mittlerer Amplitude überproportional verstärkt werden, wobei mittlere Amplituden dadurch definiert sind, dass sie in einem Intervall oberhalb eines Rauschpegels und unterhalb eines Startsignals oder eines Artefakts vom Ende der Sonde als den stärksten zu erwartenden Signale liegen. Somit sind die auszuwertenden Reflexionssignale in dem Signalverlauf von Anfang an stärker ausgeprägt, und die Auswertung wird erheblich erleichtert.

Der Signalverlauf des reflektierten Signals wird bevorzugt mit einer nichtlinearen Kennlinie verstärkt aufgezeichnet, bei der Eingangssignale kleiner Amplitude und/oder großer Amplitude unterdrückt werden, wobei kleine Amplituden als unterhalb oder in der Nähe eines Rauschpegels und große Amplituden als in der Größenordnung eines Startsignals oder eines Artefakts vom Ende der Sonde definiert sind. Die nichtlineare Kennlinie unterdrückt Anteile des Signalverlaufs, die ohnehin keinem zu messenden Reflexionssignal entsprechen können. Auch dadurch wird das Auffinden der Reflexionssignale vereinfacht.

Die Kennlinie ist bevorzugt für minimale und maximale Eingangssignale flach bei einem Bruchteil maximaler Verstärkung, liegt für Eingangssignale um Null bei Null und hat dazwischen einen sigmoiden Verlauf, wobei der sigmoide Verlauf insbesondere durch ein Polynom vorgeschrieben ist und wobei die Anschlussstellen des Polynoms zu den flachen Bereichen zumindest stetig differenzierbar sind. Ein solches Polynom ist leicht parametrierbar und implementiert die in den vorangehenden Absätzen beschriebene nichtlineare Kennlinie, welche dem Reflexionssignal entsprechende Eingangssignale mittlerer Amplituden verstärkt und Störsignale niedriger oder hoher Amplituden unterdrückt. Die Kennlinie kann symmetrisch zur Mittelachse mit dem Eingangssignal Null sein, oder es werden unterschiedliche Polynome und Anschlussstellen der Polynome für positive und negative Eingangssignale definiert, um beispielsweise positive Signale wie einen Referenzpuls am Anfang des Signalverlaufs oder einen Artefaktpuls am Ende des Signalverlaufs anders zu behandeln als negative Signale, wie sie bei Reflexionen an einer Grenzfläche entstehen.

Der Signalverlauf wird bevorzugt zunächst mit diskreten Stützstellen digitalisiert und anschließend stückweise durch eine Schar von Polynomen zweiter Ordnung zwischen je zwei Stützstellen interpoliert, wobei die Anschlussstellen zwischen zwei Polynomen stetig differenzierbar sind. Diese Polynome sollten nicht mit dem Polynom der Verstärkerkennlinie verwechselt werden, sie haben nichts miteinander zu tun. Durch die Interpolation wird der diskrete Signalverlauf analytisch zugänglich, und zugleich sind Messwerte mit höherer Auflösung als der Abtastrate des A/D-Wandlers möglich. Das Interpolationsverfahren gemäß dieser und den im Folgenden noch vorgestellten Ausführungsformen eignet sich besonders auch in dem Fall, in dem die Abtastzeitpunkte nicht äquidistant sind. Bekannte Interpolationsverfahren wie eine sinc(x)-Interpolation können mit derartigen nicht äquidistanten Messdaten nicht umgehen.

Bevorzugt wird zwischen je zwei Stützstellen, in denen die Steigung des Signalverlaufs unterhalb einer ersten Mindeststeigung liegt, anstelle eines Polynoms zweiter Ordnung ein Polynom erster Ordnung für die Interpolation verwendet. Bereiche geringer Steigung weisen mit hoher Wahrscheinlichkeit keine Reflexionssignale auf und sind daher für die Auswertung nicht interessant. Eine Interpolation mit Geradenstücken an diesen Stellen sorgt überdies für einen insgesamt glatteren Kurvenverlauf.

Vorteilhafterweise bleibt dann, wenn in der Umgebung einer Stützstelle die Steigung des Signalverlaufs unterhalb einer zweiten Mindeststeigung liegt, die Stützstelle in der weiteren Interpolation unberücksichtigt. Mit einer solchen adaptiven Interpolation wird der Rechenaufwand und der erforderliche Speicherplatz verringert, indem in für die Messwerte in aller Regel unwichtigen Bereichen anstelle zweier oder mehrerer sehr flache Geradenstücke oder Parabelbögen ein Geradenstück mittlerer Steigung verwendet wird. Die erste Mindeststeigung sollte bevorzugt größer sein als die zweite Mindeststeigung, da ansonsten keine Geradenstücke vorkommen könnten, sondern entsprechende Bereiche unmittelbar unberücksichtigt blieben.

Die Signallaufzeiten $\Delta t_{end}^{Mi}$ werden bevorzugt anhand der Lage von Maxima in dem Signalverlauf bestimmt, wobei zunächst eine steigende Flanke über eine Mindestdauer aufgefunden, dann in einem Zeitfenster um diese steigende Flanke eine fallende Flanke gesucht wird, woraus auf ein Maximum zwischen der steigenden Flanke und der fallenden Flanke geschlossen wird und, sofern es hinter der fallenden Flanke nochmals eine Krümmungsänderung gibt, weitere Maxima innerhalb des Zeitfensters durch erneutes Aufsuchen von steigenden und fallenden Flanken aufgefunden werden. Auf diese Weise werden Extrema aufgetrennt, die aus mehreren Reflexionpulsen bestehen, um nahe aneinanderliegende Grenzflächen einzeln aufzulösen. Der Begriff Maximum wird hier ohne Beschränkung der Allgemeinheit verwendet. Minima werden ganz analog unter den entsprechenden Vorzeichenwechseln gefunden. Die Breite des Zeitfensters ist so zu wählen, dass auch in ihrem Reflexionssignal ineinander verschmelzende Grenzflächen innerhalb des Zeitfensters liegen, nicht jedoch hinreichend beabstandete weitere Reflexionssignale, da diese im weiteren Verfahren gesondert in einem neuen Zeitfenster auszuwerten sind.

Bevorzugt werden die Maxima in einem Durchlauf des Signalsverlaufs von links nach rechts und in einem Durchlauf des Signalverlaufs von rechts nach links ermittelt. Damit werden ineinander verschmolzene Reflexionssignale sowohl in dem Falle gefunden, dass ein kleines Reflexionssignal einem größeren Reflexionssignal vorhergeht, wie dass es ihm nachfolgt. Die auf Positionen bezogenen Begrifflichkeiten orientieren sich an einer grafischen Darstellung des Signalverlaufs. Eigentlich müsste man von zeitlichen Richtungen, also früheren und späteren Ereignissen sprechen, aber Position und Zeit sind bei bekannten relativen Dielektrizitätskonstanten unmittelbar ineinander umrechenbar.

Die genaue Lage der Maxima wird bevorzugt analytisch aus einer Interpolation des Signalverlaufs ermittelt. Das ist ein weiterer großer Vorteil der Interpolation, denn damit sind Auflösungen weit unterhalb der Abtastrate des diskreten Signalverlaufs mit sehr einfachen analytischen Extremwertbestimmungen möglich.

In bevorzugter Weiterbildung wird ein Soll-Signalverlauf aus einer Faltung des Sendesignals mit durch die Amplituden $A_{refl}^{Mi}$ gewichteten Deltapulsen zu den Zeitpunkten der Signallaufzeiten $\Delta t_{start}^{Mi}$ gebildet und ein Satz optimaler Amplituden $A_{refl}^{Mi}$ und Signallaufzeiten $\Delta t_{start}^{Mi}$ dadurch gesucht, dass der Soll-Signalverlauf von dem Signalverlauf möglichst wenig abweicht, wobei insbesondere die gemessenen Amplituden $A_{refl}^{Mi}$ und Signallaufzeiten $\Delta t_{start}^{Mi}$ als Anfangswerte des Optimierungsproblems verwendet werden. Damit wird letztlich ein Soll-Signalverlauf an den tatsächlichen Signalverlauf gefittet, wobei die Fitparameter gerade die gesuchten Amplituden $A_{refl}^{Mi}$ und zeitlichen Lagen $\Delta t_{start}^{Mi}$ der Reflexionssignale sind. Durch eine solche Optimierung sind besonders genaue Messergebnisse erzielbar. Das häufige Problem einer nur lokalen Konvergenz von Optimierungsalgorithmen sowie des hohen Aufwands bis zur Konvergenz kann durch die sehr guten Anfangswerte vermieden werden, welche mit den weiter oben beschriebenen Verfahren gefunden werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1    ein beispielhafter von einem TDR-Sensor aufgezeichneter Signalverlauf mit Erläuterung der Parameter Amplitude und zeitliche Lage der Reflexionssig- nale;

Fig. 2    eine schematische Darstellung einer beispielhaften Schichtung zweier Me- dien mit Erläuterung weiterer Parameter und der Berechnung der Amplitu- de der Reflexionssignale;

Fig. 3    eine beispielhafte nichtlineare Kennlinie zur Signalverstärkung in Form ei- ner Parabel;

Fig. 4    ein beispielhafter Signalverlauf bei Verstärkung mit der Kennlinie gemäß Figur 3;

Fig. 5    eine beispielhafte nichtlineare Kennlinie zur Signalverstärkung in Form ei- nes Cosinus;

Fig. 6    ein beispielhafter Signalverlauf bei Verstärkung mit der Kennlinie gemäß Figur 5;

Fig. 7    eine beispielhafte nichtlineare Kennlinie zur Signalverstärkung in Form ei- ner zusammengesetzten Funktion aus flachen Bereichen und Polynomen;

Fig. 8    ein beispielhafter Signalverlauf bei Verstärkung mit der Kennlinie gemäß Figur 7;

Fig. 9    ein beispielhafter diskreter Signalverlauf und dessen Interpolation mittels eines Kardinalsinus;

Fig. 10   eine Ausschnittsvergrößerung aus dem Signalverlauf und der Interpolation der Figur 9;

Fig. 11   eine Ausschnittsvergrößerung eines beispielhaften diskreten Signalverlaufs und dessen Interpolation mittels Spline-Funktionen;

Fig. 12   eine Ausschnittsvergrößerung eines beispielhaften diskreten Signalverlaufs und dessen Interpolation mittels stückweise quadratischer Funktionen und Spline-Funktionen;

Fig. 13   eine Ausschnittsvergrößerung eines beispielhaften diskreten Signalverlaufs und dessen Interpolation mittels stückweise quadratisch/linearer Funktio- nen und Spline-Funktionen;

Fig. 14   eine Darstellung gemäß Figur 13 in einem anderen Ausschnitt des Signal- verlaufs;

Fig. 15   ein beispielhafter diskreter Signalverlauf bei adaptiver Interpolation mit un- berücksichtigten Stützstellen in Bereichen geringer Steigung;

Fig. 16   eine Ausschnittsvergrößerung aus dem Signalverlauf und der Interpolation der Figur 15;

Fig. 17   eine andere Ausschnittsvergrößerung aus dem Signalverlauf und der Inter- polation der Figur 15;

Fig. 18   im linken Teil die Darstellung dreier möglicher Sonderfälle ineinander ver- schmelzender Reflexionssignale, im rechten Teil die drei Sonderfälle bei nichtlinearer Verstärkung;

EP 2 365 302 B1

Fig. 19   im linken Teil die drei Sonderfälle des linken Teils der Figur 18 bei adapti- ver Interpolation, im rechten Teil Ausschnittsvergrößerungen dazu;

Fig. 20   im linken Teil die drei Sonderfälle des rechten Teils der Figur 18 bei adapti- ver Interpolation, im rechten Teil Ausschnittsvergrößerungen hierzu;

Fig. 21   Ausschnittsvergrößerungen ineinander verschmolzener Reflexionssignale in den drei Sonderfällen gemäß Figur 18 zur Erläuterung der Lage eines ersten Maximums;

Fig. 22   die Ausschnittsvergrößerungen der Figur 21 mit Erläuterung des Auffindens fallender Flanken bei Auswertung von links nach rechts;

Fig. 23   die Ausschnittsvergrößerungen der Figur 21 mit Erläuterung des Auffindens fallender Flanken bei umgekehrter Auswertung von rechts nach links;

Fig. 24   im linken Teil die Ausschnittsvergrößerung der Figur 21 mit den gekenn- zeichneten Lagen sämtlicher Maxima der verschmolzenen Reflexionssig- nale, im rechten Teil entsprechende vollständige Signalverläufe;

Fig. 25   eine Ausschnittsvergrößerung eines beispielhaften Signalverlaufs in einem ersten Sonderfall zur Erläuterung eines Optimierungsverfahrens zum Auf- finden von Amplitude und zeitlicher Lage der Reflexionssignale.

Fig. 26   eine schematische Darstellung eines TDR-Sensors in einer Anwendung als Füllstandssensor nach dem Stand der Technik;

Fig. 27   ein Blockschaltbild eines Sensorkopfes mit der Ansteuerung des Sensors gemäß Figur 26 nach dem Stand der Technik;

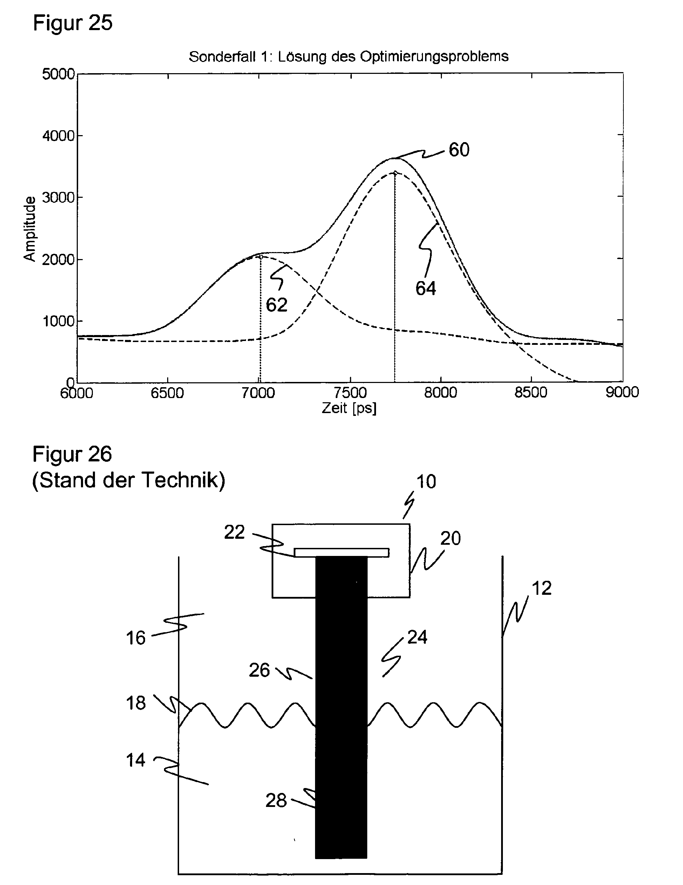

Figur 26 zeigt schematisch einen TDR-Sensor 10 nach dem Stand der Technik, der als Füllstandssensor in einem Tank oder Behälter 12 mit einem Medium oder einer Flüssigkeit 14 angebracht ist. Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist. Dabei ist insbesondere an andere Grenzflächen 18 zu denken, beispielsweise zu Schüttgut oder Granulaten, oder an Störstellen in Leitungen.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine koaxiale Sonde 24 angeschlossen, welche einen Außenleiter 26 und einen Innenleiter 28 aufweist. Bei einer solchen geschlossenen Sonde 24 werden die elektromagnetischen Signale besonders störungsfrei geführt. Es ist aber auch denkbar, eine andere Sondenform einzusetzen, beispielsweise eine offene Monosonde, die leichter gereinigt werden kann.

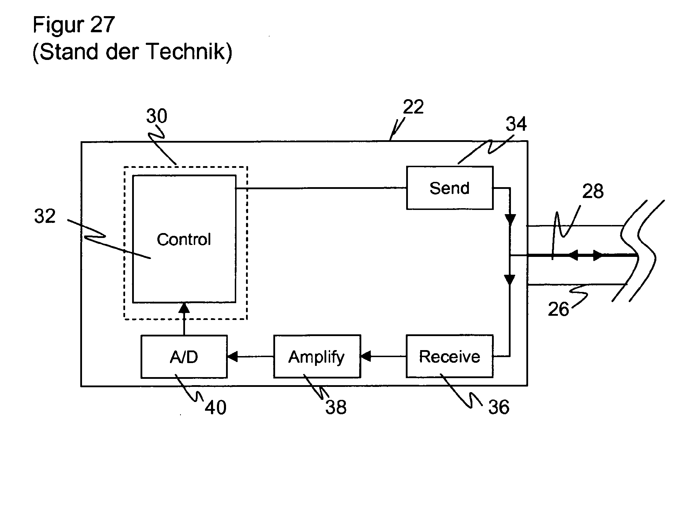

Die in dem Sensorkopf 20 vorgesehene Steuerung 22 beziehungsweise ihre Platine ist in Figur 27 in einem Blockschaltbild dargestellt. Die eigentliche Steuerung bildet ein FPGA 30, der auch ein Mikroprozessor, ASIC oder ein ähnlicher digitaler Logikbaustein sowie eine Kombination mehrerer derartiger Bausteine sein kann und in dem die Auswertungseinheit 32 implementiert ist.

Wie auch schon einleitend beschrieben, wird bei einer Messung ein Puls über einen Mikrowellensender 34 auf den Innenleiter 28 gegeben und die Laufzeit des an der Grenzfläche 18 entstehenden und in einem Mikrowellenempfänger 36 empfangenen Reflexpulses gemessen, um den Abstand der Grenzfläche 18 und damit den Füllstand in dem Behälter 12 zu ermitteln. Das Empfangssignal des Mikrowellenempfängers 36 wird für die Auswertung nach Verstärkung in einem Verstärker 38 mit einem Digital/Analogwandler 40 digitalisiert.

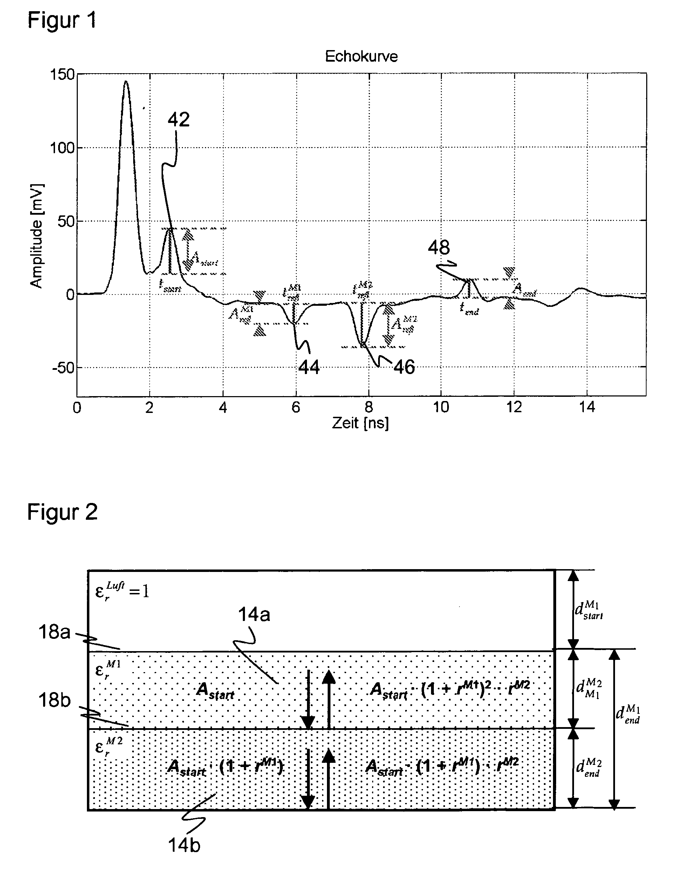

Erfindungsgemäß ist vorgesehen, die Entfernung zu mehr als einer Grenzfläche zu bestimmen. Die hierfür erforderlichen Auswertungsverfahren sind in der Auswertungseinheit 32 implementiert und werden im Folgenden anhand der Figuren 1 bis 25 näher erläutert.

Figur 1 zeigt einen beispielhaften, von einem TDR-Sensor 10 aufgezeichneten Signalverlauf aus einer Füllstandsmessung in einem Behälter mit zwei übereinander geschichteten Medien. Der Signalverlauf wird in der Bildüberschrift als Echokurve bezeichnet, da es sich um die Reaktion des Systems auf einen Sendepuls handelt. Zur Vereinfachung der Darstellung und der Erläuterung ist eine ideale Kurve ohne parasitäre Effekte, EMV-Störungen oder andere Rauschquellen gezeichnet. In der Praxis kann eine zumindest einigermaßen glatte Kurve durch analoge oder digitale Filterung erzielt werden.

Für die Auswertung werden die Extrema des Signalverlaufs herangezogen, um die Entfernung zu den Grenzflächen und die relative Permittivität beziehungsweise die relative Dielektrizitätskonstante der Medien zu messen. Ein erstes Maximum ist ein reines Artefakt und wird nicht weiter diskutiert. Das folgende Maximum 42 entsteht am Anfang der Sonde 24, der im Folgenden auch als Leitungseingang bezeichnet wird, und dient als Anfangsreferenzimpuls. Bei den nachfolgenden beiden Minima 44, 46 wird das Sendesignal an der ersten Grenzfläche zu dem ersten Medium beziehungsweise an der zweiten Grenzfläche zu dem zweiten Medium in dem Behälter 12 reflektiert. Vom Ende der Sonde 24 stammt ein letztes Maximum 48 als Endreferenzimpuls. Die späteren Signalanteile sind nicht mehr relevant, weitere kleinere Extrema sind höhere Ordnungen von Mehrfachreflexionen an den beiden Grenzflächen. Es ist denkbar, diese Extrema zur Plausibilisierung heranzuziehen, aber zumeist sind sie dafür wegen zu geringem Signal/Rauschverhältnis nicht geeignet.

Jedes Extremum 42-48 wird wie dargestellt durch zwei Parameter beschrieben, nämlich die Amplitude $A_{start}$, $A_{refl}^{Mi}$, $A_{end}$ und die zeitliche Lage $t_{start}$, $t_{refl}^{Mi}$, $t_{end}$. Der hochgestellte Laufindex *Mi* steht jeweils für das i-te Medium.

Zunächst werden nun der Anfangsreferenzimpuls 42, der Endreferenzimpuls 48 und der am nächsten bei dem Anfangsreferenzimpuls 42 gelegene Reflexionsimpuls 44 von der ersten Grenzfläche gesucht. Aus deren Amplituden und zeitlichen Lagen wird auf zweierlei Arten die relative Dielektrizitätskonstante des ersten Mediums bestimmt, um anschließend die Ergebnisse zu vergleichen und zu entscheiden, ob unter dem ersten Medium ein weiteres Medium in dem Behälter 12 vorhanden ist.

Ein erstes Verfahren bestimmt die relative Dielektrizitätskonstante $\varepsilon_{r1}^{M1}$ aus den Amplituden $A_{start}$ des Anfangsreferenzimpulses 42 und $A_{refl}^{M1}$ des Reflexionsimpulses 44 an der ersten Grenzfläche. Der Index *ri* steht für relative Dielektrizitätskonstante nach dem i-ten Verfahren.

Der Reflexionskoeffizient der ersten Grenzfläche $r^{M1}$ beträgt

$$r^{M1} = \frac{\underline{Z}_1 - \underline{Z}_L}{\underline{Z}_1 + \underline{Z}_L} = \frac{1 - \sqrt{\varepsilon_{r1}^{M1}}}{1 + \sqrt{\varepsilon_{r1}^{M1}}}$$

und gibt an, welcher Energieanteil an der ersten Grenzfläche zurückreflektiert wird. Dabei ist $Z_L$ die Wellenimpedanz des luftgefüllten Raumes über dem ersten Medium und $\underline{Z}_1$ die Wellenimpedanz des ersten Mediums. Die Amplituden $A_{start}$ und $A_{refl}^{M1}$ sind mit dem Reflexionskoeffizient $r^{M1}$ durch

$$r^{M1} = \frac{A_{refl}^{M1}}{A_{start}}$$

verknüpft. Aus beiden Gleichungen bestimmt sich die relative Dielektrizitätskonstante des ersten Mediums zu

$$\varepsilon_{r1}^{M1} = \left( \frac{1 - r^{M1}}{1 + r^{M1}} \right)^2 .$$

Ein zweites Verfahren bestimmt die relative Dielektrizitätskonstante $\varepsilon_{r2}^{M1}$ nochmals unabhängig aus der Differenz zwischen dem Zeitpunkt $t_{refl}^{M1}$ des ersten Reflexionsimpulses 44 und dem Zeitpunkt $t_{end}$ des Endreferenzimpulses 48. Dazu wird zunächst die Zeitdifferenz $\Delta t_{start}^{M1} = t_{refl}^{M1} - t_{start}$ zwischen erstem Reflexionsimpuls 44 und Anfangsreferenzimpuls 42 sowie die Zeitdifferenz $\Delta t_{end}^{M1} = t_{end} - t_{refl}^{M1}$ zwischen erstem Reflexionsimpuls 44 und Endreferenzimpuls 48 definiert.

Für die Entfernung $d_{start}^{M1}$ zwischen dem Leitungseingang und der ersten Grenzfläche kann als Laufgeschwindigkeit die Vakuumlichtgeschwindigkeit c verwendet werden, weil in diesem Bereich die relative Dielektrizitätskonstante $\varepsilon_{r,Luft} = 1$ ist. Die Entfernung $d_{start}^{M1}$ der ersten Grenzfläche beträgt deshalb

$$d_{start}^{M1} = \frac{c}{2} \cdot \Delta t_{start}^{M1}.$$

Unter Kenntnis der Sondenlänge L berechnet sich die Entfernung $d_{end}^{M1}$ zwischen der ersten Grenzfläche und dem Sondenende sehr einfach zu

$$d_{end}^{M1} = L - d_{start}^{M1}.$$

Die Ausbreitungsgeschwindigkeit der elektromagnetischen Wellen in dem ersten Medium beträgt

$$v^{M1} = \frac{c}{\sqrt{\varepsilon_{r2}^{M1}}}$$

und somit der in der Zeit $\Delta t_{end}^{M1}/2$ zurückgelegte Weg

$$d_{end}^{M1} = \frac{c}{\sqrt{\varepsilon_{r2}^{M1}} \cdot 2} \cdot \Delta t_{end}^{M1}.$$

Unter der hypothetischen Voraussetzung, dass sich nur ein einziges Medium in dem Behälter 12 unterhalb der ersten Grenzfläche befindet, ergibt sich dann

$$\varepsilon_{r2}^{M1} = \left( \frac{c \cdot \Delta t_{end}^{M1}}{2 \cdot d_{end}^{M1}} \right)^2.$$

Um nun zu entscheiden, ob tatsächlich nur ein einziges Medium vorhanden ist oder ob ein weiteres Medium unter das erste Medium geschichtet ist, wird überprüft, ob $\varepsilon_{r1}^{M1}$ und $\varepsilon_{r2}^{M1}$ bis auf eine zuvor festgelegte Toleranzgrenze $\zeta^{M1}$ übereinstimmen, ob also gilt:

$$\left| \varepsilon_{r2}^{M1} - \varepsilon_{r1}^{M1} \right| \leq \zeta^{M1}.$$

Es wird wegen möglicher Rundungsfehler, Quantisierungsfehler, Fehler in der Zeitbasis, also Schwankungen der Abtastzeitpunkte, Messfehler, Störeinflüsse auf das Messsignal oder andere parasitäre Effekte nur Gleichheit innerhalb der Toleranzgrenze $\zeta^{M1}$ gefordert. Ist die Gleichheit innerhalb der Toleranz $\zeta^{M1}$ gegeben, so befindet sich nur ein einziges Medium in dem Behälter 12. Seine relative Dielektrizitätskonstante $\varepsilon_{r}^{M1}$ wird aus den beiden berechneten Werten $\varepsilon_{r1}^{M1}$ und $\varepsilon_{r2}^{M1}$ abgeleitet, indem beispielsweise unmittelbar einer der beiden Werte oder ein Mittelwert, auch ein unterschiedlich gewichteter Mittelwert, verwendet wird. Die Entfernung von dem Leitungseingang zu der ersten Grenzfläche ist $d_{start}^{M1}$.

Ergibt sich andererseits ein Unterschied $\left|\varepsilon_{r2}^{M1} - \varepsilon_{r1}^{M1}\right| > \zeta^{M1}$ oberhalb der Toleranzgrenze $\zeta^{M1}$, so ist diese Diskrepanz nur so zu erklären, dass die Laufgeschwindigkeit jenseits der ersten Grenzfläche durch $\varepsilon_{r1}^{M1}$ nicht gut beschrieben wird, sich also ein weiteres zweites Medium unterhalb des ersten Mediums befinden muss. Deshalb wird in diesem Fall nach einem weiteren Reflexionsimpuls 46 in dem Signalverlauf gesucht und dessen Amplitude $A_{refl}^{M2}$ und zeitliche Position $t_{refl}^{M2}$ ermittelt, um auch die Entfernung $d_{start}^{M2}$ zu der zweiten Grenzfläche und die relative Dielektrizitätskonstante $\varepsilon_{r}^{M2}$ des zweiten Mediums zu bestimmen.

Figur 2 erläutert eine solche Situation mit zwei übereinander geschichteten Medien 14a-b, denen auch der beispielhafte Signalverlauf der Figur 1 entspricht. Darin sind einige der verwendeten Parameter veranschaulicht. Beispielsweise handelt es sich bei dem ersten Medium 14a um Schaum, welches eine erste Grenzfläche 18a bildet, und bei dem zweiten Medium 14b, welches eine zweite Grenzfläche 18b bildet, um eine Flüssigkeit. Die oberste Schicht wird von Luft gebildet.

Erneut werden die zwei unterschiedlichen Verfahren eingesetzt, um die Entfernung $d_{start}^{M2}$ zu der zweiten Grenzfläche 18b und die relative Dielektrizitätskonstante $\varepsilon_{r}^{M2}$ des zweiten Mediums 14b zu berechnen.

Für das erste Verfahren wird der Reflexionskoeffizient $r^{M2}$ an der zweiten Grenzfläche 18b in Kenntnis der relativen Dielektrizitätskonstanten $\varepsilon_{r1}^{M1}$ des ersten Mediums 14a aus dem ersten Schritt zu

$$r^{M2} = \frac{\underline{Z}_2 - \underline{Z}_1}{\underline{Z}_2 + \underline{Z}_1} = \frac{\sqrt{\varepsilon_{r1}^{M1}} - \sqrt{\varepsilon_{r1}^{M2}}}{\sqrt{\varepsilon_{r1}^{M1}} + \sqrt{\varepsilon_{r1}^{M2}}}.$$

ermittelt. $Z_1$ bezeichnet die Wellenimpedanz in dem ersten Medium 14a und $Z_2$ die Wellenimpedanz in dem zweiten Medium 14b. Für das erste Medium 14a wird die nach dem ersten Verfahren bestimmte Dielektrizitätskonstanten $\varepsilon_{r1}^{M1}$ verwendet, da die nach dem zweiten Verfahren bestimmte relative Dielektrizitätskonstanten $\varepsilon_{r2}^{M1}$ unter der nunmehr als falsch erwiesenen Hypothese berechnet wurde, dass es nur ein Medium in dem Behälter 12 gibt. Die relative Dielektrizitätskonstante $\varepsilon_{r}^{M2}$ ist eine noch unbekannte Größe.

Figur 2 illustriert auch den Zusammenhang zwischen den Amplituden $A_{start}$ und $A_{refl}^{M2}$. Auf die erste Grenzfläche 18a trifft ein Impuls mit der Amplitude $A_{start}$. Der Impulsanteil, der weiter Richtung Sondenende läuft, hängt allein vom Reflexionskoeffizient $r^{M1}$ der ersten Grenzfläche 18a ab und beträgt $A_{start} \cdot (r^{M1} + 1)$. Dieser Impulsanteil trifft auf die zweite Grenzfläche 18b, und ein Teil des Impulses wird zurück in Richtung der ersten Grenzfläche 18a reflektiert. Dessen Amplitude hängt zusätzlich von dem Reflexionskoeffizienten $r^{M2}$ der zweiten Grenzfläche 18b ab und beträgt $A_{start} \cdot (r^{M1} + 1) \cdot r^{M2}$. Die rücklaufende Welle trifft ein zweites Mal aus der entgegengesetzten Richtung auf die erste Grenzfläche 18a. Dabei wird wiederum ein Anteil reflektiert, während der restliche Anteil in Richtung Leitungseingang zurückläuft. Diese Amplitude beträgt

$$A_{refl}^{M2} = A_{start} \cdot (r^{M1} + 1)^2 \cdot r^{M2}.$$

Die Amplituden $A_{start}$ und $A_{refl}^{M2}$ sind Messwerte, so dass hiermit der Reflexionskoeffizient $r^{M2}$ der zweiten Grenzfläche 18b nunmehr bekannt ist:

$$r^{M2} = \frac{A_{refl}^{M2}}{A_{start} \cdot (r^{M1}+1)^2} \cdot$$

Folglich gilt aus der eingangs angegebenen Gleichung für $r^{M2}$

$$\varepsilon_{r1}^{M2} = \left(\frac{1-r^{M2}}{1+r^{M2}}\right)^2 \cdot \varepsilon_r^{M1} \cdot$$

Für das zweite Verfahren zur Bestimmung der relativen Dielektrizitätskonstanten $\varepsilon_{r2}^{M1}$ des zweiten Mediums 14b werden analog dem Vorgehen bei der ersten Grenzfläche 18a zunächst eine Zeitdifferenz $\Delta t_{M1}^{M2} = t_{refl}^{M2} - t_{refl}^{M1}$ zwischen der zeitlichen Position des ersten Reflexionsimpulses 44 und des zweiten Reflexionsimpulses 46 sowie eine Zeitdifferenz $\Delta t_{end}^{M2} = t_{end} - t_{refl}^{M2}$ zwischen der zeitlichen Position des zweiten Reflexionsimpulses 46 und des Endreferenzimpulses 48 definiert.

Die Entfernung zwischen der ersten Grenzfläche 18a und zweiten Grenzfläche 18b beträgt folglich

$$d_{M1}^{M2} = \frac{c}{2 \cdot \sqrt{\varepsilon_{r1}^{M1}}} \cdot \Delta t_{M1}^{M2},$$

somit die Entfernung vom Leitungseingang zu der zweiten Grenzfläche 18b

$$d_{start}^{M2} = d_{start}^{M1} + d_{M1}^{M2}$$

und die Entfernung von der zweiten Grenzfläche 18b zu dem Ende der Sonde 24

$$d_{end}^{M2} = L - d_{start}^{M2} \cdot$$

Erneut wird zunächst hypothetisch angenommen, dass unterhalb des zweiten Mediums 14b kein weiteres Medium und damit keine weitere Grenzschicht befindet. Dann gilt

$$d_{end}^{M2} = \frac{c}{\sqrt{\varepsilon_{r2}^{M2} \cdot 2}} \cdot \Delta t_{end}^{M2}$$

und nach Umstellen der Gleichung

$$\varepsilon_{r2}^{M2} = \left(\frac{c \cdot \Delta t_{end}^{M2}}{2 \cdot d_{end}^{M2}}\right)^2 \cdot$$

Wie schon an der ersten Grenzschicht 18a werden die Ergebnisse $\varepsilon_{r1}^{M2}$ und $\varepsilon_{r2}^{M2}$ beider Verfahren mit einer Toleranzschwelle $\zeta^{M2}$ verglichen. Danach ist bei Übereinstimmung die Messung mit den Ergebnissen $d_{start}^{M1}$, $d_{start}^{M2}$ für die Entfernungen zu den beiden Grenzflächen 18a-b und den relativen Dielektrizitätskonstanten $\varepsilon_r^{M1}$, $\varepsilon_r^{M2}$ für die beiden Medien 14a-b beendet, wobei letztere beispielsweise dem Ergebnis aus einem der beiden Verfahren oder einem Mittelwert beider Verfahren entsprechen. Bei unzureichender Übereinstimmung wird dagegen ein weiteres Medium unterhalb des zweiten Mediums 14b angenommen.

Für weitere Medien wird das Vorgehen iterativ wiederholt, bis alle vorhandenen Medien gefunden wurden oder bis eine Abbruchbedingung erfüllt ist. Die weiteren Iterationen werden nur noch kurz beschrieben, um verallgemeinerte Rechenvorschriften für das n-te Medium anzugeben.

Der verallgemeinerte Reflexionskoeffizient $r^{Mn}$ der n-ten Grenzfläche beträgt in Kenntnis der Reflexionskoeffizienten aller darüber liegende Grenzflächen

$$r^{Mn} = \frac{A_{refl}^{Mn} \cdot r^{M(n-1)}}{A_{start} \cdot \prod_{i=1}^{n-1} (r^{Mi}+1)^2 \cdot r^{Mi}}.$$

Unter Verwendung von:

$$r^{Mn} = \frac{\underline{Z}_n - \underline{Z}_{n-1}}{\underline{Z}_n + \underline{Z}_{n-1}} = \frac{\sqrt{\varepsilon_r^{M(n-1)}} - \sqrt{\varepsilon_r^{Mn}}}{\sqrt{\varepsilon_r^{M(n-1)}} + \sqrt{\varepsilon_r^{Mn}}}$$

berechnet sich die relative Dielektrizitätskonstante der n-ten Grenzschicht nach dem ersten Verfahren zu

$$\varepsilon_{r1}^{Mn} = \left(\frac{1-r^{Mn}}{1+r^{Mn}}\right)^2 \cdot \varepsilon_r^{M(n-1)}.$$

Für das zweite Verfahren wird die Zeitdifferenz $\Delta t_{M(n-1)}^{Mn} = t_{refl}^{Mn} - t_{refl}^{M(n-1)}$ zwischen der zeitlichen Position des n-ten und (n-1)-ten Reflexionsimpulses sowie die Zeitdifferenz $\Delta t_{end}^{Mn} = t_{end} - t_{refl}^{Mn}$ zwischen der zeitlichen Position des n-ten Reflexionsimpulses und des Endreferenzimpulses 48 definiert. Die Schichtdicke des n-ten Mediums ist

$$d_{M(n-1)}^{Mn} = \frac{c}{2 \cdot \sqrt{\varepsilon_r^{M(n-1)}}} \cdot \Delta t_{M(n-1)}^{Mn}.$$

und damit die Entfernung der n-ten Grenzfläche

$$d_{start}^{Mn} = d_{Start}^{M(n-1)} + d_{M(n.1)}^{Mn}$$

bekannt. Weiter gilt

$$d_{end}^{Mn} = L - d_{start}^{Mn}.$$

Die relative Dielektrizitätskonstante des n-ten Mediums berechnet sich zu

$$\varepsilon_{r2}^{Mn} = \left( \frac{c \cdot \Delta t_{end}^{Mn}}{2 \cdot d_{end}^{Mn}} \right)^2.$$

Wie oben für die erste und zweite Grenzfläche erläutert, wird anschließend geprüft, ob die Bedingung

$$\left| \varepsilon_{r2}^{Mn} - \varepsilon_{r1}^{Mn} \right| \leq \zeta^{Mn}$$

erfüllt ist. Ist dies nicht der Fall, so kann eine nächste Iteration für die (n+1)-te Grenzschicht folgen.

Neben dem genannten Abbruchkriterium, dass die mit jeweils zwei Verfahren bestimmten Dielektrizitätskonstanten innerhalb der geforderten Toleranzen übereinstimmen, sind auch andere Abbruchkriterien denkbar, wie beispielsweise eine Beschränkung der Anzahl an Medien, die gesucht werden soll, eine minimale erforderliche Amplitude des Reflexionspulses, da Störeinflüsse auf das Messsignal bei kleinen Amplituden zu einem hohen relativen Fehler führen, eine Begrenzung der zeitlichen Position der Reflexionspulse oder die Forderung, dass das bestimmte Integral über die Energie $E(\tau_{refl}^{Mn})$ des Signalverlaufs s(t), beginnend von einem Startpunkt $t = 0$ bis zu der n-ten Reflexionsstelle

$t = \tau_{refl}^{Mn}$ einen Wert $E_0$ nicht überschreitet, dass also $E(\tau_{refl}^{Mn}) = \int_{t=0}^{\tau_{refl}^{Mn}} \left| s(t) \right|^2 dt < E_0$ gilt.

Um die Parameter von Reflexionspulsen 44, 46 möglichst genau zu schätzen, ist in einer Weiterbildung der Erfindung vorgesehen, den Verstärker 38 mit einer nichtlinearen Kennlinie zu betreiben. Sind die Reflexionspulse 44, 46 dann eindeutig identifiziert, so sollte vor quantitativen Auswertungen von Amplitudenwerten der bekannte Effekt der nichtlinearen Verstärkung wieder herausgerechnet werden.

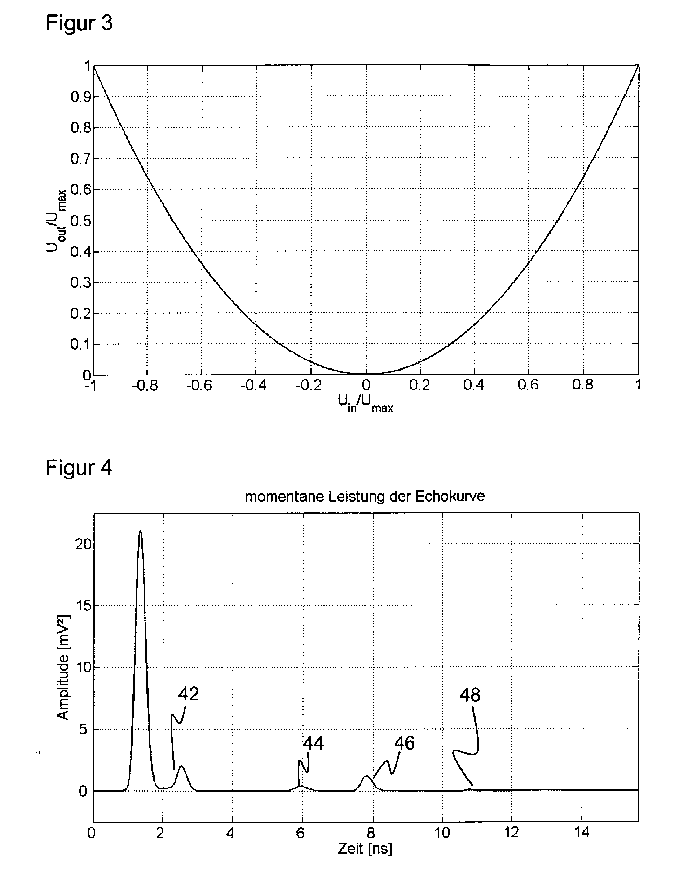

Figur 3 zeigt ein Beispiel einer nichtlinearen Verstärkung, wobei die Verstärkung quadratisch durch $U_{out} = U_{in}^2$ erfolgt. Dies entspringt der Überlegung, statt der Signalamplitude die Leistung zu betrachten, welche dem Quadrat der Spannung proportional ist.

Figur 4 stellt die Wirkung der Verstärkung mit einer Kennlinie gemäß Figur 3 auf den Signalverlauf der Figur 1 dar. Die beiden Reflexionspulse 44, 46 lassen sich ersichtlich besser trennen, da außer dem anfänglichen Artefakt gar keine störenden Extrema mehr auftreten. Allerdings werden ohnehin schon gut ausgeprägte Pulse wie der anfängliche Artefaktpuls unnötigerweise weit überproportional verstärkt.

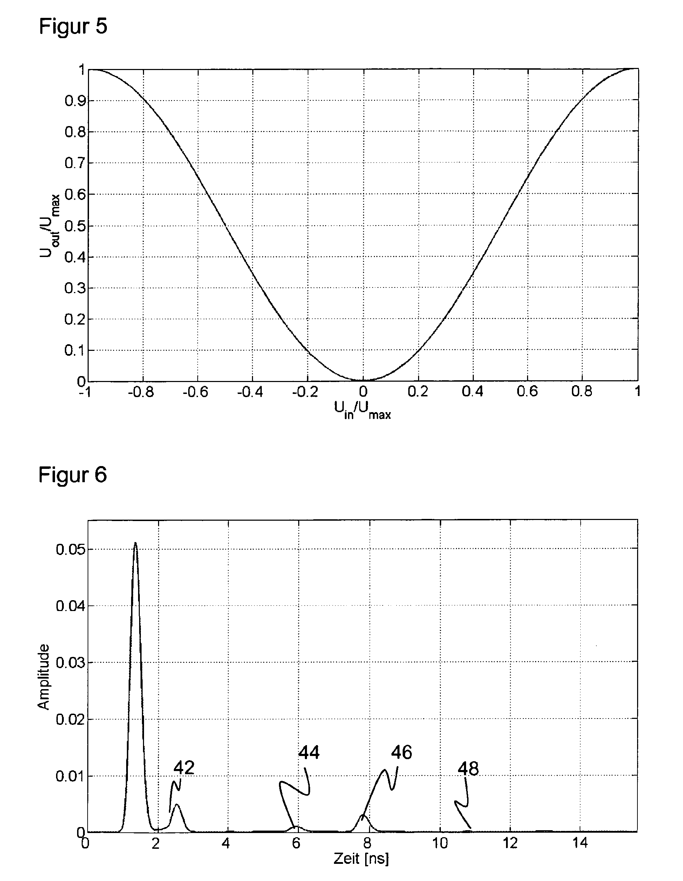

Die Kennlinie ist deshalb bevorzugt so anzupassen, dass gezielt die Amplituden der Reflexionspulse 44, 46 an den Grenzflächen verstärkt und die übrigen Pulse unterdrückt werden. Figur 5 zeigt eine weitere Kennlinie mit der Rechenvorschrift $U_{out} = \frac{U_{max}}{2} \cdot \left( 1 - \cos(\pi \cdot U_{in}) \right)$ und Figur 6 deren Wirkung auf den Signalverlauf der Figur 1. Das Ergebnis ist etwas besser als im Falle der Kennlinie der Figur 3, kann aber weiter optimiert werden.

Dazu werden können beispielsweise mehrere bevorzugt stetig differenzierbare Funktionen stückweise zusammengesetzt werden, um gezielt die gewünschte Verstärkung mittlerer Amplituden, in denen Messpulse 44, 46 liegen, und Unterdrückung von Artefakten und Rauschen zu erreichen. Eine mögliche Kennlinie wird durch

$$\frac{U_{out}}{U_{max}} = \begin{cases} 0, & |u(t)| \le \dfrac{\sqrt{a}-\sqrt{2}}{2\sqrt{a}} \\[2ex] a \cdot \left( |u(t)| - \dfrac{\sqrt{a}-\sqrt{2}}{2\sqrt{a}} \right)^2, & \dfrac{\sqrt{a}-\sqrt{2}}{2\sqrt{a}} < |u(t)| < \dfrac{1}{2} \\[2ex] 1 - a \cdot \left( |u(t)| - \dfrac{\sqrt{a}+\sqrt{2}}{2\sqrt{a}} \right)^2, & \dfrac{1}{2} < |u(t)| \le \dfrac{\sqrt{a}+\sqrt{2}}{2\sqrt{a}} \\[2ex] 1, & |u(t)| > \dfrac{\sqrt{a}+\sqrt{2}}{2\sqrt{a}} \end{cases}$$

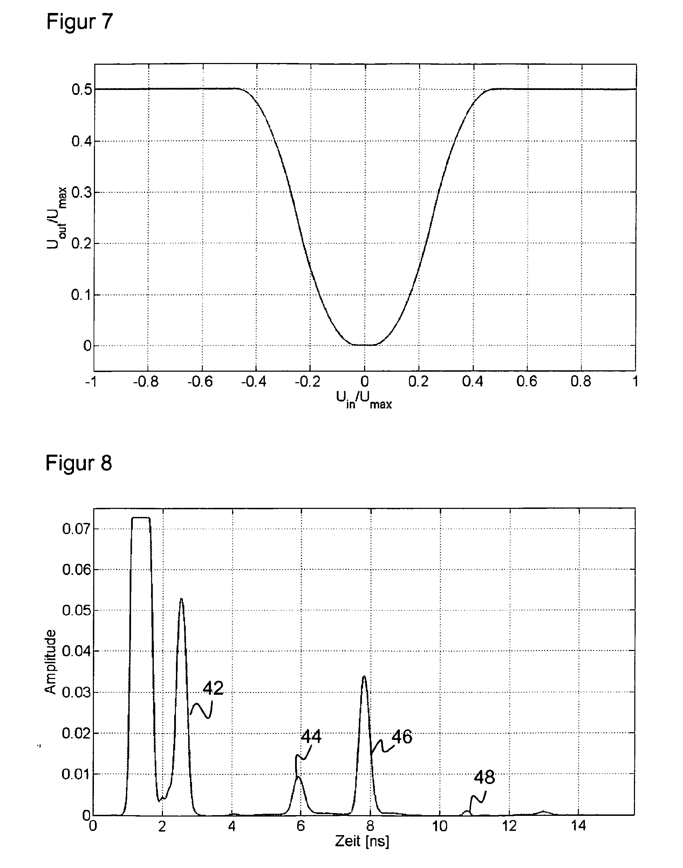

definiert, wobei $\alpha$ einen einstellbaren Verstärkungsfaktor bezeichnet, und ist in Figur 7 gezeigt.

Die Wirkung der Kennlinie gemäß Figur 7 auf den Signalverlauf der Figur 1 zeigt die Figur 8. Die Pulse 42-48 sind nun sehr deutlich identifizierbar. Der Endreferenzimpuls 48 ist etwas weniger ausgeprägt, kann aber wegen der bekannten Sondenlänge gezielt in einem recht engen Zeitbereich gesucht und damit dennoch sicher detektiert werden. Solange die Kennlinie monoton ist, bleibt die Position der Pulse 42-48 unter nichtlinearer Verstärkung erhalten.

Es können nach den beschriebenen Leitlinien abweichende, auch nicht-symmetrische nichtlineare Kennlinien definiert werden. Dabei sind prinzipiell beliebige stückweise Funktionsverläufe denkbar, wie polynomiale, exponentielle, logarithmische, hyperbolische oder trigonometrische Funktionen.

Für die Signalverarbeitung steht nicht der gesamte analoge Signalverlauf, sondern nur eine endliche Anzahl diskreter Messwerte zu meist äquidistanten, durch die Abtastrate des A/D-Wandlers 40 gegebenen äquidistanten Zeitpunkten zur Verfügung. Für TDR-Sonden wird häufig noch eine als Zeitdehnung bekannte Unterabtastung vorgenommen, um die sehr kurzen Signalverläufe mit langsamerer Elektronik zu erfassen. Auf diese dem Fachmann geläufigen Verfahren soll hier aber nicht näher eingegangen werden.

Die diskreten Messwerte werden interpoliert, um eine analytische Funktion zu gewinnen und die Messgenauigkeit des Sensors über die zeitliche Auflösung der Abtastzeitpunkte hinaus zu steigern. Eine polynomiale Interpolation ist dabei nicht zielführend. Zunächst müsste wegen der hohen Anzahl von Stützstellen ein Polynom sehr hoher Ordnung verwendet werden. Selbst wenn man den Aufwand hierfür in Kauf nimmt, bildet das Polynom die Zwischenwerte der Stützstellen aufgrund von Runges Phänomen sehr schlecht ab, so dass ein solches Interpolationspolynom für die Bestimmung von Reflexionspulsen 44, 46 weitgehend nutzlos ist. Selbst wenn man die Interpolation auf kleinere Bereiche des Signalverlaufs und einfache Polynome beispielsweise zweiter oder dritter Ordnung beschränkt, ergeben sich signifikante Abweichungen zwischen Signalverlauf und Interpolationspolynom.

Ein anderes denkbares Verfahren ist die sinc(x)-Interpolation. Das grundsätzliche Problem hierbei ist die Fensterung im Zeitbereich. Als Ausweg sind endliche Filter (FIR, Filter mit endlicher Impulsantwort) oder das Auffüllen mit Nullen (Zero padding) bekannt.

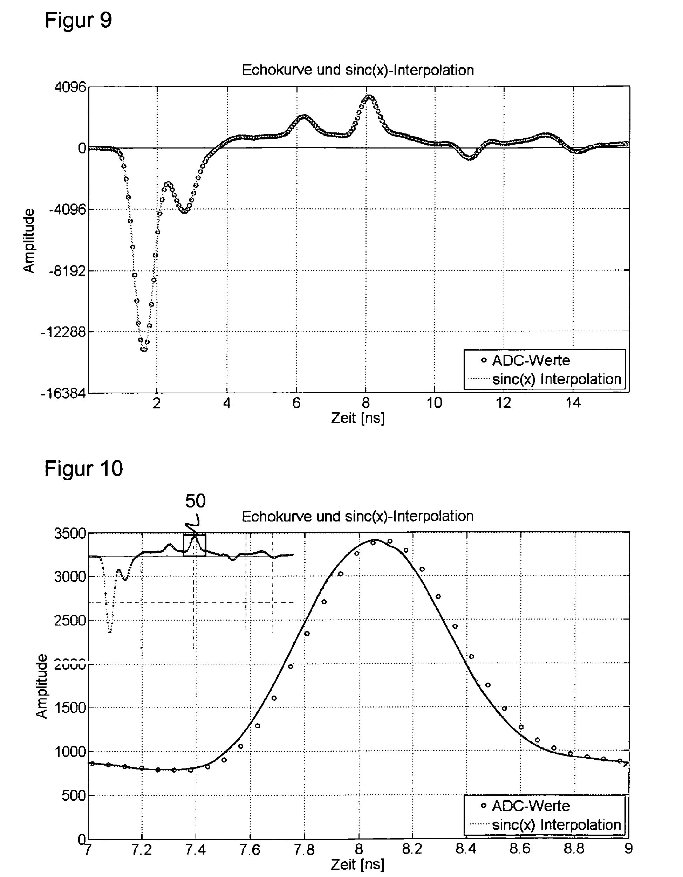

Figur 9 zeigt den Signalverlauf der Figur 1 an der Y-Achse gespiegelt und diskretisiert sowie eine sinc(x)-Interpolation zum Vergleich. Figur 10 ist eine Ausschnittsvergrößerung, wobei oben rechts der gesamte Signalverlauf piktogrammartig mit einem Rechteck 50 gezeigt ist, welches die Position des Ausschnitts bezeichnet. Diese Form der Darstellung wird bei allen folgenden Ausschnittsvergrößerungen zur Erläuterung der Interpolation verwendet. Der Figur 10 ist zu entnehmen, dass die sinc(x)-Interpolation trotz ihres hohen Aufwands relativ große Interpolationsfehler erzeugt.

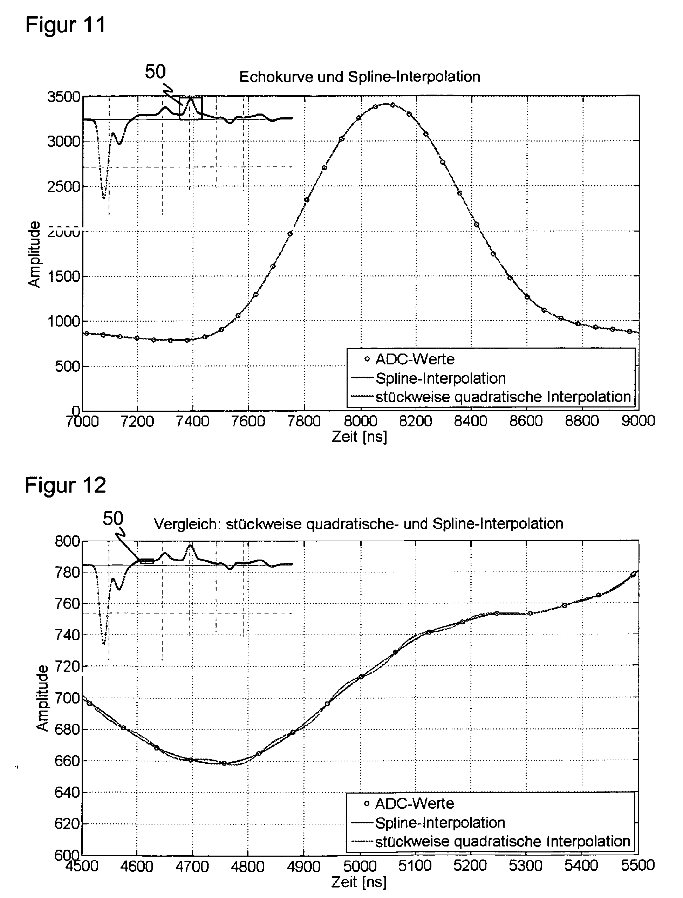

Ein anderes denkbares Interpolationsverfahren besteht in der stückweisen Interpolation unter Verwendung von Splines, insbesondere kubischen $C^2$-Splines, die also einschließlich ihrer Anschlussstellen zweimal stetig differenzierbar sind. Wie die Ausschnittsvergrößerungen der Figuren 11 und 12 demonstrieren, eignet sich eine Spline-Interpolation für den Signalverlauf gemäß Figur 1 sehr gut. Diese Qualität wird aber durch hohen numerischen Aufwand erkauft.

In einer Ausführungsform der Erfindung wird deshalb eine stückweise quadratische Interpolation verwendet. Ein Kurvenstück zwischen zwei benachbarten Stützstellen wird dabei mit quadratischen Polynomen interpoliert:

$$s_i(x) = a_i \cdot (x - x_i)^2 + b_i \cdot (x - x_i) + c_i, \quad i = 1,\ldots,N-1$$

Dabei bezeichnet $s_i(x)$ das i-te Kurvenstück zwischen dem i-ten und (i+1)-ten Abtastpunkt, $x_i$ die diskreten Zeitpunkte und $y_i$ die diskreten Amplituden. Alle Polynome müssen drei Anforderungen erfüllen:

1. Die Interpolationsfunktion soll alle Messpunkte beinhalten $\rightarrow s_i(x_i) = y_i$
2. Die Interpolationsfunktion soll stetig sein $\rightarrow s_i(x_{i+1}) = s_{i+1}(x_{i+1})$
3. Die Interpolationsfunktion soll differenzierbar sein $\rightarrow s_i'(x_{i+1}) = s_{i+1}'(x_{i+1})$

Aus diesen Bedingungen lässt sich ein Gleichungssystem ableiten:.

$$s_i(x_i) = c_i$$

$$s_i(x_{i+1}) = a_i \cdot \Delta x^2 + b_i \cdot \Delta x + c_i$$

$$s_i'(x_{i+1}) = 2a_i \cdot \Delta x + b_i$$

$$s_{i+1}'(x_{i+1}) = b_{i+1}$$

$$\delta_i = \frac{y_{i+1} - y_i}{\Delta x}$$

Dabei sind $a_i$, $b_i$ und $c_i$ die Polynomkoeffizienten, $\delta_i$ die Steigung zwischen zwei benachbarten Abtastpunkten und $\Delta x$ deren zeitlicher Abstand. Diese Gleichungen werden nach ihren Koeffizienten aufgelöst:

$$(1) \quad \delta_i = \frac{y_{i+1} - y_i}{\Delta x}$$

$$(2) \quad c_i = y_i$$

$$(3) \quad b_i = 2 \cdot \delta_i - b_{i-1}$$

$$(4) \quad a_i = \frac{\delta_i - b_i}{\Delta x}$$

Für die Bestimmung des ersten Stücks der Interpolationsfunktion wird die Vereinfachung getroffen, dass dieses eine lineare Steigung hat, da es sonst unterbestimmt wäre, und es gilt zusätzlich $c_1 = y_1$, $b_1 = \delta_1$, $\alpha_1 = 0$.

In die Figuren 11 und 12 ist zusätzlich zu einer Spline-Interpolation als Referenz die soeben abgeleitete stückweise quadratische Interpolation dargestellt. In einem Ausschnitt mit größerer Variabilität gemäß Figur 11, also größeren Steigungen zwischen je zwei Stützstellen, unterscheiden sich die beiden Interpolationen nicht erkennbar voneinander. In dem flacheren Ausschnitt der Figur 12 kommt es dagegen bei der stückweise quadratischen Interpolation zu leichten Überschwingern an den Stützstellen, die einen kleinen Interpolationsfehler einführen. Zu beachten ist der unterschiedliche Maßstab der Figuren 11 und 12 in Y-Richtung, der Signalverlauf in Figur 12 wirkt dadurch optisch deutlich steiler, als er ist.

Deshalb ist in einer Weiterbildung der Erfindung vorgesehen, die stückweise quadratische Interpolation durch eine Kombination aus quadratischer Interpolation in steilen und linearer Interpolation in flachen Teilbereichen zu ersetzen.

Dabei wird folgende Rechenvorschrift verwendet:

$$s_i(x) = \begin{cases} a_i \cdot (x-x_i)^2 + b_i \cdot (x-x_i) + c_i, & |y_{i+1} - y_i| > \xi \wedge \left( |y_i - y_{i-k_1}| > \zeta_1 \vee |y_{i+1} - y_{i-k_2}| > \zeta_2 \right) \\ \delta_i \cdot (x-x_i) + c_i, & \text{sonst} \end{cases}$$

Für das Stück $s_i(x)$ des Signalverlaufs zwischen den Wertepaaren $(x_i,y_i)$ und $(x_{i+1},y_{i+1})$ wird ein quadratisches Polynom verwendet, falls die Differenz der zugehörigen Amplitudenwerte einen bestimmten Wert $\xi$ überschreitet. Zusätzlich kann gefordert werden, dass der Unterschied zwischen den Amplitudenwerten von mindestens einem der beiden Wertepaare und dem Amplitudenwert an einer zusätzlichen Stützstelle in der Umgebung einen Mindestwert $\zeta$ betragen muss. Falls diese Bedingungen nicht erfüllt sind, wird das Stück $s_i(x)$ durch ein lineares Polynom approximiert.

Das Stück des Signalverlaufs wird weiterhin durch

$$s_i(x) = a_i \cdot (x - x_i)^2 + b_i \cdot (x - x_i) + c_i$$

beschrieben. Auch die Rechenvorschrift für die Koeffizienten $\delta_i$ und $c_i$ ist bei Verwendung von linearen und quadratischen Interpolationspolynomen die gleiche:

$$\delta_i = \frac{y_{i+1} - y_i}{\Delta x},$$

$$c_i = y_i.$$

Die Koeffizienten $b_i$ und $a_i$ werden aber in beiden Fällen unterschiedlich berechnet, nämlich für linear interpolierte Stücke des Signalverlaufs $b_i = \delta_i$, $a_i = 0$ und für quadratisch interpolierte Kurvenstücke $b_i = 2 \cdot \delta_i - b_{i-1}$, $a_i = \frac{\delta_i - b_i}{\Delta x}$.

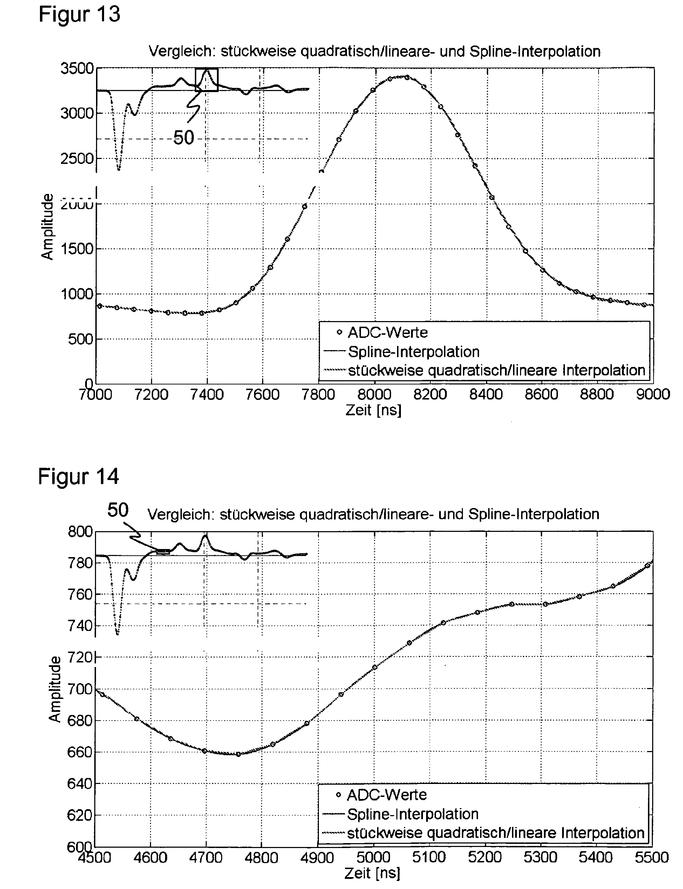

Die Figuren 13 und 14 zeigen nochmals die Ausschnitte der Figuren 11 und 12 mit dem Unterschied, dass anstelle der stückweise quadratischen Interpolation nunmehr die stückweise quadratisch/lineare Interpolation verwendet wird. In Figur 13 sind schon deshalb keine Unterschiede zu erwarten, weil in diesem Ausschnitt die Steigungsbedingung für quadratische Interpolation nicht oder nur an ganz wenigen Stellen verletzt ist, so dass praktisch nur die quadratische Interpolation zum Tragen kommt. Dagegen ist in Figur 14 eine deutliche Verbesserung erkennbar. Die lineare Approximation in Bereichen kleiner Steigung zeigt nicht die störenden Überschwinger und führt damit zu einem deutlich geringeren Interpolationsfehler bei sogar vergleichsweise geringerem Rechenaufwand. Zwar ist der Interpolationsfehler noch größer als bei Spline-Interpolation. In den flachen Bereichen ist aber der Interpolationsfehler ohnehin eher hinnehmbar, da hier keine Reflexionspulse 44, 46 zu erwarten sind. Erneut ist der unterschiedliche Maßstab der Figuren 13 und 14 in Y-Richtung zu beachten.

Wie ein Blick auf Figur 1 zeigt, sind nicht alle abgetasteten Punkte des Signalverlaufs für die Bestimmung von Amplitude und Lage der Reflexionspulse 44, 46 relevant. Deshalb werden in einer weiteren Ausführungsform der Erfindung nur Stützstellen $(x_i, y_i)$ berücksichtigt, wenn die Differenz zwischen Amplitudenmaximum und -minimum in einer Umgebung $[x_{i-\lambda}, x_{i+\lambda}]$ der Stützstelle einen Mindestbetrag $\sigma$ überschreitet:

$$\left| \max(y_{i-\lambda}, \ldots, y_{i+\lambda}) - \min(y_{i-\lambda}, \ldots, y_{i+\lambda}) \right| \geq \sigma$$

Die verbleibenden Stützstellen werden im Folgenden einem anderen Laufindex zugeordnet. Diese werden als $(x_j, y_j)$ bezeichnet, und ihre Anzahl $M$ ist kleiner oder gleich der originalen Anzahl an Stützstellen $N$:

$$i = 1, \ldots, N \qquad ; \qquad j = 1, \ldots, M \qquad ; \qquad N \geq M$$

Die in den bisherigen Ausführungsformen konstante Differenz $\Delta x$ der Lage der Stützstellen in x-Richtung wird dann durch $h_j = x_{j+1} - x_j$ ersetzt und für die Wahl linearer oder quadratischer Interpolation zwischen den verbleibenden Stützstellen die folgende Fallunterscheidung in Abhängigkeit von einer vorgebbaren Mindeststeigung $\nu$ getroffen.

$$s_j(x) = \begin{cases} a_j \cdot (x - x_j)^2 + b_j \cdot (x - x_j) + c_j, & h_j \geq \nu \\ \delta_j \cdot (x - x_j) + c_j, & h_j < \nu \end{cases}.$$

Mit den Koeffizienten $a_j$, $b_j$ und $c_j$ der allgemeinen Interpolationsfunktion

$$s_j(x) = a_j \cdot (x - x_j)^2 + b_j \cdot (x - x_j) + c_j$$

berechnen sich für lineare und quadratische Interpolation $h_j, \delta_j$ und $c_j$ zu

$$h_j = x_{j+1} - x_j$$

$$\delta_j = \frac{y_{j+1} - y_j}{h_j}$$

$$c_j = y_j$$

und für die übrigen Koeffizienten gilt in linear interpolierten Teilbereichen $b_j = \delta_j$; $a_j = 0$ sowie in quadratisch interpolierten Teilbereichen $b_j = 2 \cdot \delta_j - \delta_{j-1}$; $a_j = \dfrac{\delta_j - b_j}{h_j}$.

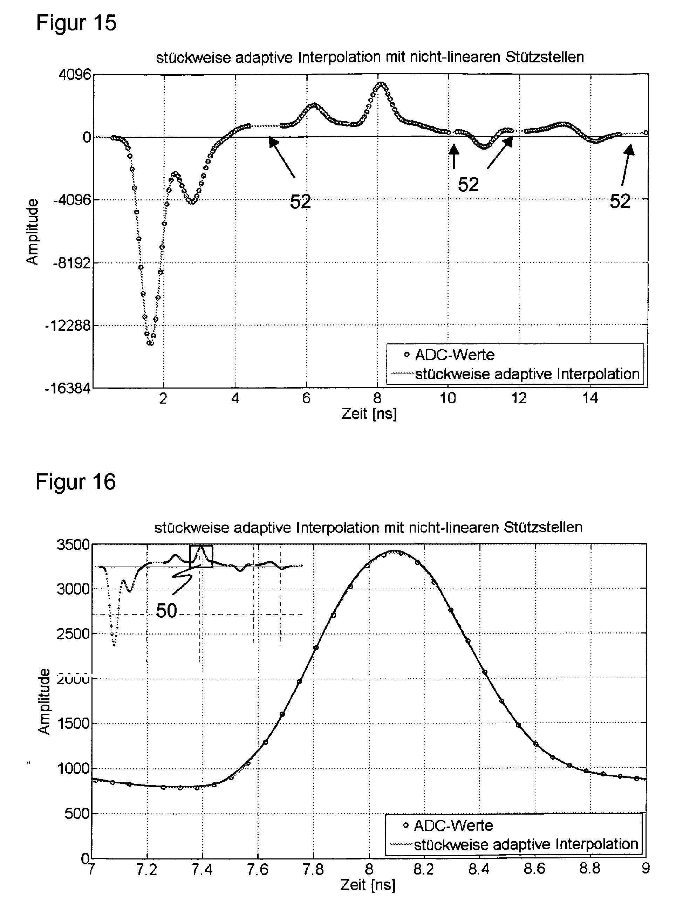

Figur 15 zeigt den diskretisierten Signalverlauf mit der soeben beschriebenen adaptiven Interpolation. Dabei wurde $\nu = \Delta x$ gesetzt. In mit Pfeilen 52 gekennzeichneten Bereichen sind keine Stützstellen mehr vorhanden. Zu beachten ist, dass derartige Teilbereiche ohne Stützstellen bei größerer Sondenlänge einen erheblichen Anteil der gesamten Stützstellenzahl erreichen können.

Bei dieser Abbildung ist deutlich zu sehen, dass bei dem Reflexionspuls eine quadratische Interpolation durchgeführt wurde. Dabei sind zeitliche Position und Amplitude des Maximums bei der Reflexionsstelle deutlich zu erkennen.

Figur 16 zeigt einen Ausschnitt der Figur 15 in einem Bereich mit großen Steigungen, in der folglich mit quadratischen Polynomen interpoliert wird. Die relevanten Größen, nämlich Amplitude und Lage des Maximums, sind deutlich zu erkennen.

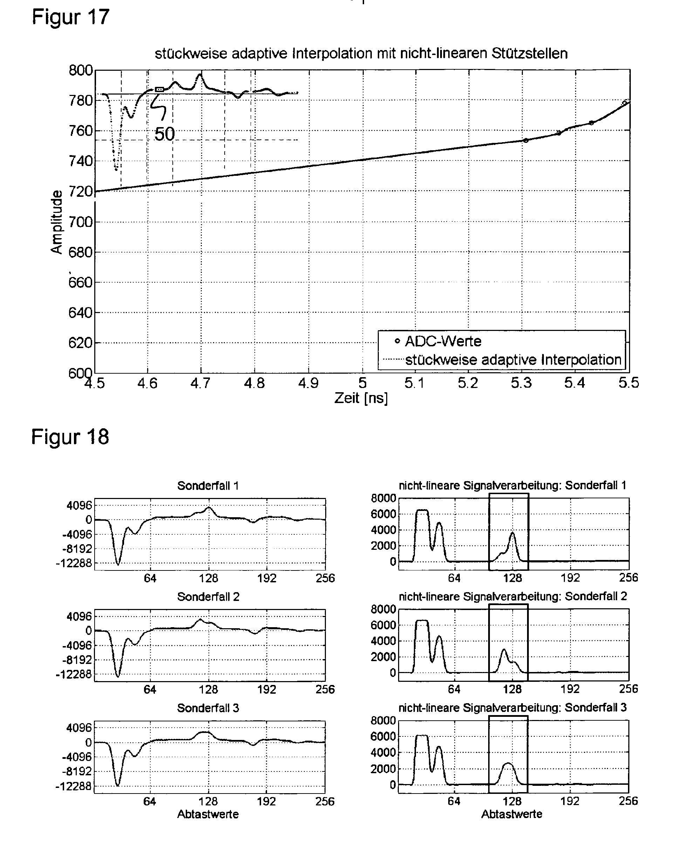

Figur 17 stellt zum Vergleich einen Ausschnitt der Figur 15 in einem Bereich mit geringer Steigung dar. Aufgrund des gegenüber Figur 16 geänderten Maßstabs in Y-Richtung ist die verbleibende Steigung des Signalverlaufs optisch noch übertrieben. Beinahe alle Stützstellen bleiben unberücksichtigt und werden durch eine lineare Interpolation überbrückt.

Die beschriebene adaptive Interpolation vermeidet unnötigen Aufwand in irrelevanten Teilbereichen. Interessante Teilbereiche dagegen werden sehr genau interpoliert. Dabei ist der Aufwand gegenüber Spline-Interpolation oder gar sinc-Interpolation erheblich reduziert. Alle beschriebenen Interpolationsmethoden sind gleichermaßen auf linear wie nichtlinear vorverstärkte Signalverläufe anwendbar.

Die Messung der Entfernung zu mehreren Grenzflächen setzt voraus, dass die einzelnen Reflexionspulse 44, 46 genau aufgelöst und deren Amplitude und Lage möglichst genau bestimmt werden. Dies bereitet besonders dann Schwierigkeiten, wenn ein Medium eine besonders dünne Schicht bildet, so dass die Reflexionspulse zweier Grenzflächen einander überlagern. Eine einfache Suche nach Extrema läuft dann nicht nur Gefahr, eine Grenzfläche zu übersehen. Wegen der abweichenden Kurvenform überlagerter Reflexionspulse wird dabei möglicherweise auch die Lage des Maximums und damit auch dessen Amplitude falsch bewertet.

Figur 18 zeigt drei denkbare Sonderfälle, in denen sich zwei Reflexionspulse überlagern. Im linken Teil der Figur 18 sind die Signalverläufe linear beziehungsweise nicht verstärkt, im rechten Teil der Figur 18 dagegen mit einer nichtlinearen Kennlinie verstärkt. In einem ersten Sonderfall ist der frühere Reflexionspuls weniger ausgeprägt und führt nur zu einer vorgelagerten Schulter des späteren Reflexionspulses. Ein zweiter Sonderfall ist die zeitliche Spiegelung hierzu, wo der spätere Reflexionspuls weniger ausgeprägt ist und zu einer nachgelagerten Schulter führt. In einem dritten Sonderfall sind die beiden Reflexionspulse vollständig zu einem einzigen Maximum verschmolzen.

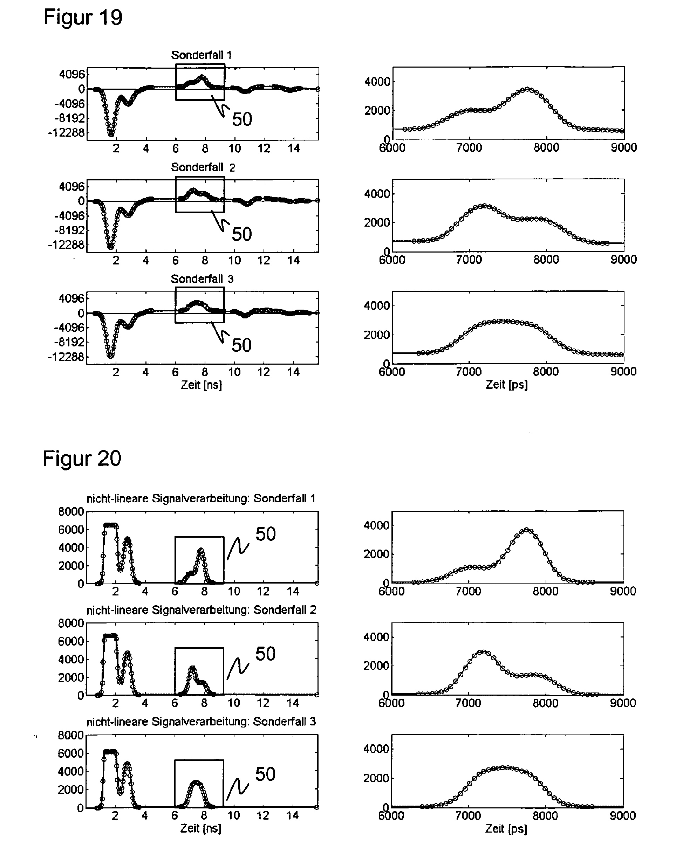

Das erfindungsgemäße Verfahren zum Auffinden der Reflexionspulse verwendet bevorzugt die oben beschriebene adaptive linear/quadratische Interpolation. Figur 19 zeigt die drei Sonderfälle des linken Teils der Figur 18, also die linear verstärkten Signalverläufe, nach dieser Interpolation. Der linke Teil der Figur 19 stellt die vollständigen Signalverläufe und der rechte Teil der Figur 19 die Ausschnitte 50 vergrößert dar.

Figur 20 ist analog zu der Figur 19 aufgebaut, wobei hier die drei Sonderfälle des rechten Teils der Figur 18 zugrunde gelegt sind, also die nichtlinear verstärkten Signalverläufe. Erneut stellt der linke Teil der Figur 20 die vollständigen Signalverläufe und der rechte Teil der Figur 20 die Ausschnitte 50 vergrößert dar. In der nichtlinearen Verstärkung sind die aufzufindenden lokalen Maxima besser unterscheidbar.

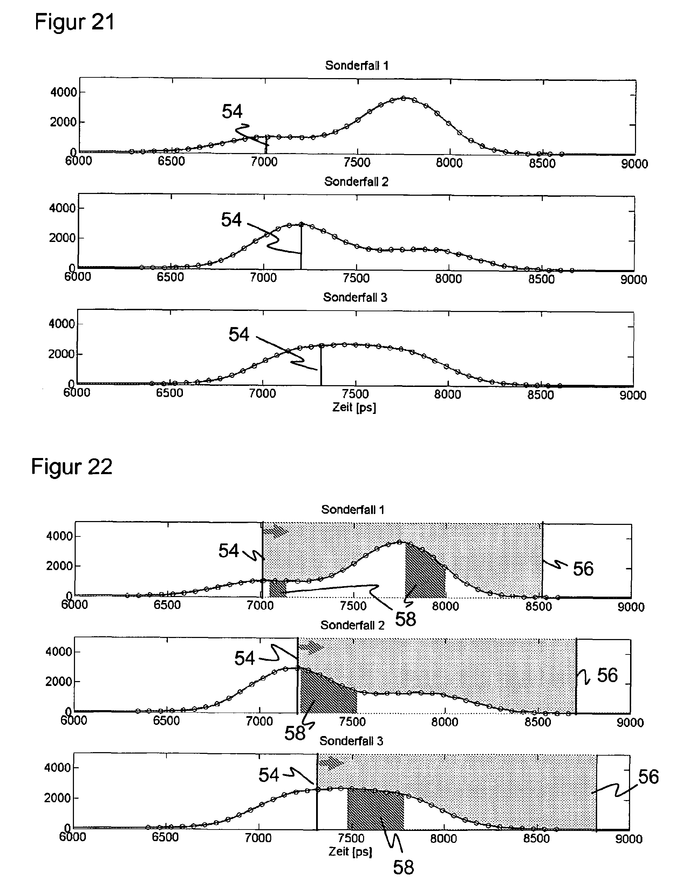

Das Verfahren zum Auffinden der Reflexionspulse wird nun unter Bezugnahme auf die Figuren 21 bis 24 weiter erläutert. In einem ersten Schritt wird nach der ersten steigenden Flanke über eine Mindestdauer gesucht und deren letzter Punkt wie in Figur 21 gezeigt als erstes Referenzmaximum 54 gesetzt.

Mit dem Referenzmaximum beginnt wie in Figur 22 gezeigt ein Zeitfenster, das nach einer vorgebbaren Dauer zu einem Zeitpunkt 56 endet. Das Zeitfenster wird beispielsweise so groß gewählt, dass zwei ineinander verschmolzene Reflexionspulse hineinpassen, ein separierter nächster Reflexionspuls aber nicht mehr erfasst ist. Die Fensterbreite ist wegen der bekannten einzelnen Pulsform und einer erwarteten Maximalamplitude unabhängig von der konkreten Messung vorab festlegbar.

In dem Zeitfenster wird nach einer fallenden Flanke 58 über eine Mindestdauer gesucht. Zwischen Referenzmaximum 54 und Beginn der fallenden Flanke 58 wird anschließend die genaue Lage des lokalen Maximums bestimmt. Da der Signalverlauf durch die Interpolationsfunktion beschrieben wird, ist die Lage analytisch mit hoher Genauigkeit bestimmbar.

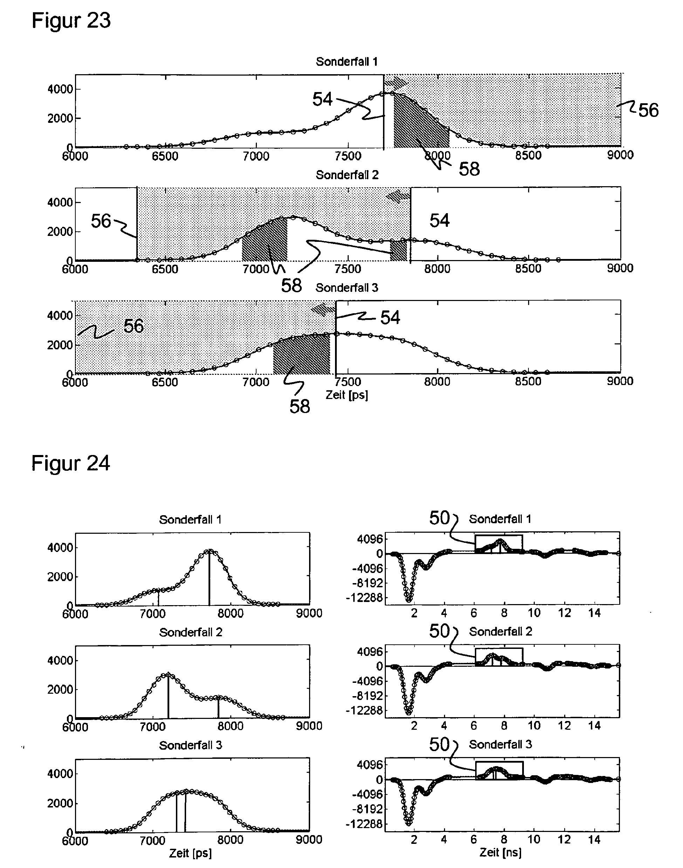

Um nun die weiteren überlagerten Referenzpulse aufzufinden, wird das Krümmungsverhalten zwischen dem Referenzmaximum 54 und dem Ende der fallenden Flanke 58 untersucht. Ist eine Krümmungsänderung vorhanden, wie beispielsweise im ersten Sonderfall, so wird das bisher beschriebene Verfahren mit der Suche eines neuen Maximums, beginnend mit dem bereits gefundenen Maximum, wiederholt. Dies illustriert das oberster Drittel der Figur 23.

Gibt es keine Krümmungsänderung, so könnte sich wie im Sonderfall 2 ein weiterer Reflexionspuls mit einer niedrigeren Amplitude hinter dem gefundenen Maximum befinden. Das Verfahren wird dann wie in den beiden unteren Dritteln der Figur 23 illustriert in entgegengesetzter Richtung wiederholt. Der gesamte Vorgang wird iteriert, bis linksseitiges und rechtsseitiges Maximum übereinstimmen. Das Verfahren kann anschließend fortgesetzt werden, bis die gesamte Sondenlänge abgearbeitet ist.

Figur 24 zeigt die somit getrennten Reflexionspulse, wobei im linken Teil Ausschnittsvergrößerungen und im rechten Teil die vollständigen Signalverläufe in den drei Sonderfällen dargestellt sind. Die zu den derart bestimmten Lagen gehörigen Amplituden können direkt aus der Interpolationsfunktion ausgelesen werden.

Die Amplituden können aber noch durch die Überlagerung verfälscht sein. Anhand der Figur 25 wird ein Optimierungsverfahren erläutert, mit dem die Überlagerung von Reflexionspulsen in die einzelnen Reflexionspulse aufgetrennt wird. Dargestellt ist einerseits der überlagerte Signalverlauf 60 und andererseits die beiden einzelnen Reflexionspulse 62, 64, welche die Überlagerung bilden. Im Beispiel der Figur 25 ist demnach die Anzahl n der überlagerten Reflexionspulse zwei. Es ist deutlich zu erkennen, dass die Amplituden, besonders die Amplitude des zweiten Reflexionspulses 64, ohne die gezeigte Auftrennung nur anhand des überlagerten Signalverlaufs 60 überschätzt würde.

Die Form des Sendepulses S(t) und damit eines einzelnen Reflexionspulses ist bekannt oder wird vorab ausgemessen. Die beiden zu bestimmenden Parameter des i-ten Reflexionspulses sind dessen Amplitude $A_{refl}^{Mi}$ und zeitliche Lage $t_{start}^{Mi}$. Daraus kann ein theoretischer Signalverlauf

$$s_{Soll}(t) = \sum_{i=1}^{n} A_{refl}^{Mi} * S(t - t_{start}^{Mi})$$

abgeleitet werden. Der theoretische Signalverlauf enthält bei *n* Medien 2*n* freie Parameter. Diese Parameter werden gefunden, indem der theoretische Signalverlauf an den tatsächlichen Signalverlauf gefittet wird. Dazu kann beispielsweise die L2-Norm der Differenzfunktion minimiert werden:

$$\Delta E = \int_{t_{start}}^{t_{end}} (s(t) - s_{Soll}(t))^2 \, dt \rightarrow 0 \, .$$

Selbstverständlich sind andere Maße für die Güte der Übereinstimmung verwendbar. Algorithmen, welche die optimale Wahl der Parameter $A_{refl}^{Mi}$ und $t_{start}^{Mi}$ zur Minimierung von $\Delta E$ auffinden, sind dem Fachmann an sich bekannt und werden hier nicht weiter diskutiert.

Ein häufiges Problem derartiger Optimierungen ist, dass sie nicht oder nur lokal konvergieren. Deshalb sieht die Erfindung bevorzugt vor, nicht ganz allgemein über die gesamte Sondenlänge nach einer großen Anzahl von Medien zu suchen, sondern beispielsweise nur über ein kleines Zeitfenster nach zwei Medien, wie in dem Fall der Figur 25. Außerdem sind über die oben im Zusammenhang mit Figur 18 bis 24 beschriebenen Verfahren sehr gute Anfangswerte der freien Parameter bekannt. Diese oder ein Teil dieser Maßnahmen führen dazu, dass ein Optimierungsalgorithmus rasch in dem globalen Maximum konvergiert.

Erfindungsgemäß sind somit sowohl die Entfernungen zu den Grenzflächen als auch die relativen Dielektrizitätskonstanten der jeweiligen die Grenzflächen bildenden Medien bekannt. Dabei ist die Anzahl der Medien prinzipiell unbeschränkt. Diese deutlich erweiterten Messwerte eröffnen für Anwendungen als Füllstandssensor neue Funktionen.

Einfache Füllstandmesser haben in der Regel nur Schaltausgangssignale. Bei der Konfiguration des einfachen Interface könnte festgelegt werden, in Abhängigkeit welcher Mediumspegel bei Grenzschichtmessungen oder in Abhängigkeit des Mediums-oder Schaumpegels bei Applikationen mit Schaumbildung die Ausgänge angesteuert werden. Damit sind nutzbringende Funktionen für die Anwendung des Sensors realisierbar:

Ein Behälter, in dem eine Flüssigkeit Schaum bildet, enthält beim Leerlaufen immer noch eine Schaumschicht. Einfache Füllstandssensoren interpretieren diese Schaumschicht als Restflüssigkeit. Da der erfindungsgemäße Sensor 10 die relative Dielektrizitätskonstante kennt, wird zwischen einer Restschicht der Flüssigkeit und einer reinen Schaumschicht unterschieden. Damit lässt sich ein Trockenlaufschutz von Pumpen realisieren, und herkömmlich eigens für diese Funktion vorgesehene zusätzliche Sensoren in den Pumpenleitungen werden verzichtbar.

Ein ähnlicher Fall tritt bei hohen Füllständen mit Schaum beziehungsweise mehreren Medien auf. Es kann zu einem Überlaufen eines Behälters kommen, wenn ein einfacher Füllstandssensor eine Schaumoberfläche übersieht und nur die darunter liegende Flüssigkeitsoberfläche mit ihrer vergleichsweise hohen Reflektivität erkennt. Der erfindungsgemäße Sensor dagegen löst auch die Schaumschicht sogar einschließlich ihrer Schichtdicke auf und kann ein Schaltsignal als Überfüllwarnung generieren. Die Realisierung einer Überfüllsicherung ist für einige Anwendungen gewünscht, eine Zulassung nach WHG (Wasserhaushaltsgesetz) fordert sogar eine Überfüllsicherung.

Eine Kombination aus Überfüllwarnung aufgrund einer Schaumoberfläche und Trockenlaufschutz ist denkbar, insbesondere bei Geräten, die mehrere Schaltausgangssignale bereitstellen. Ebenso ist die analoge oder digitale Ausgabe von Füllständen aller oder einiger Medien möglich.

Die ermittelten relativen Dielektrizitätskonstanten können für eine Qualitätskontrolle des Prozesses in dem Behälter genutzt werden. Dazu werden die relativen Dielektrizitätskonstanten beispielsweise über eine Schnittstelle für die Anwendung zugänglich gemacht, oder der Sensor bietet entsprechende Einstellmöglichkeiten für ein Signal an einem Schaltausgang, wenn gewisse Kriterien für die relativen Dielektrizitätskonstanten verletzt oder eingehalten werden.

Weiterhin ist möglich, anhand des Auftretens zusätzlicher oder fehlender Trennschichten einen Fehler in dem Prozess oder den Medien zu erkennen. Beispielsweise sind einige Flüssigkeiten hygroskopisch, und in Behältern lagert sich deshalb unten Wasser ab. Hier ist das Vorhandensein einer nicht erwarteten Trennschicht nutzbar, um eine Überwachung auf Ablagerungen zu realisieren.

Schließlich ist auch eine Eigenüberwachung auf Verschmutzungen der Sonde möglich, insbesondere bei Verwendung einer geschlossenen Sonde wie einer Koaxialsonde. Besonders bei Anwendung zur Regelung von Pegelständen ist oftmals nur ein sehr enger Toleranzbereich vorgesehen. Deshalb setzen sich Schwebstoffe und Verunreinigungen in einem kleinen Bereich der Sonde in der Nähe des Pegelstands ab. Diese Verunreinigungen können stark genug sein, um ein Reflexionssignal zu erzeugen, welches als Grenzschichtreflexion interpretiert wird. Das bleibt zunächst unproblematisch, solange sich die Mediumsoberfläche im Bereich der Ablagerung befindet. Sinkt jedoch die Mediumsoberfläche ab, könnte ein einfacher Sensor das Niveau der Ablagerung fehlerhaft als Füllstand melden.

Mit dem erfindungsgemäßen Vorgehen wird aber erkannt, dass sich nach der ersten Reflexion weiterhin ein Medium mit einer relativen Dielektrizitätskonstante von etwa Eins befindet, also offensichtlich Luft. Das ist unplausibel und kann zur Generierung einer Störungsmeldung verwendet werden.

Bei ansteigendem Medium ist die Situation zwar weniger kritisch, da erstes Reflexionssignal und erste Grenzfläche übereinstimmen. Der erfindungsgemäße Sensor erkennt aber an der gleichbleibenden relativen Dielektrizitätskonstante, dass innerhalb desselben Mediums ein weiterer nicht plausibler Reflexionspuls an der Ablagerung entsteht. Der Sensor kann bereits zu diesem Zeitpunkt eine Warn- oder Störungsmeldung generieren, um später die Fehlersituation zu vermeiden, wenn der Füllstand unter die Ablagerung sinkt. Mit derartigen Eigenüberwachungen wird die Anlage vor weiteren Schäden bewahrt und deren Verfügbarkeit erhöht.

**Patentansprüche**

1. Verfahren zur Messung der Entfernung zu mindestens einer ersten Grenzfläche (18a) durch Aussenden eines elektromagnetischen Signals entlang einer Sonde (24), Aufzeichnung des Signalverlaufs des reflektierten Signals und Bestimmung der Entfernung ($d_{start}^{M1}$) bis zu der ersten Grenzfläche (18a) anhand der Signallaufzeit ($\Delta t_{start}^{M1}$), wobei die relative Dielektrizitätskonstante ($\varepsilon_{r1}^{M1}$) eines die erste Grenzfläche (18a) bildenden ersten Mediums (14a) ein erstes Mal durch Vergleich der Amplitude ($A_{refl}^{M1}$) des Reflexionssignals an der ersten Grenzfläche (18a) mit einer Referenzamplitude ($A_{start}$) des ausgesandten Signals bestimmt wird,
**dadurch gekennzeichnet,**
**dass** die relative Dielektrizitätskonstante ($\varepsilon_{r2}^{M1}$) ein zweites Mal anhand der Signallaufzeit ($\Delta t_{end}^{M1}$) und Entfernung ($d_{end}^{M1} = L - d_{start}^{M1}$) zwischen erster Grenzfläche (18a) und Sondenende L bestimmt wird, wobei bei fehlender Übereinstimmung beider Messungen innerhalb eines Toleranzbereichs angenommen wird, dass sich längs der Sonde (24) mindestens eine weitere Grenzfläche (18b) eines weiteren Mediums (14b) befindet.

2. Verfahren nach Anspruch 1, wobei die relative Dielektrizitätskonstante bei dem ersten Mal unter Verwendung eines Reflexionskoeffizienten

$r^{M1} = \dfrac{A_{refl}^{M1}}{A_{start}}$ nach der Rechenvorschrift $\varepsilon_{r1}^{M1} = \left(\dfrac{1 - r^{M1}}{1 + r^{M1}}\right)^2$ und/oder bei dem zweiten Mal nach der Rechenvorschrift

$\varepsilon_{r2}^{M1} = \left(\dfrac{c\Delta t_{end}^{M1}}{2d_{end}^{M1}}\right)^2$ bestimmt wird.

3. Verfahren nach Anspruch 1 oder 2, wobei die Entfernung ($d_{start}^{M2}$) zu einer zweiten Grenzfläche (18b) und eine relative Dielektrizitätskonstante ($\varepsilon_r^{M2}$) eines die zweite Grenzfläche (18b) bildenden zweiten Mediums (14b) auf Basis der Entfernung ($d_{start}^{M1}$) zu der ersten Grenzfläche (18a) und der relativen Dielektrizitätskonstanten ($\varepsilon_{r1}^{M1}$) des ersten Mediums (14a) ein erstes Mal durch Vergleich der Amplitude ($A_{refl}^{M2}$) des Reflexionssignals an der zweiten Grenzfläche (18b) mit der Amplitude ($A_{refl}^{M1}$) des Reflexionssignals an der ersten Grenzfläche (18a) und der Referenzamplitude ($A_{start}$), insbesondere unter Verwendung eines Reflexionskoeffizienten $r^{M2} = \dfrac{A_{refl}^{M2}}{A_{Start}(r^{M1} + 1)^2}$ nach der Rechenvorschrift

$$\varepsilon_{r1}^{M2} = \left(\frac{1 - r^{M2}}{1 + r^{M2}}\right)^2 \varepsilon_{r1}^{M1}$$, und ein zweites Mal anhand der Signallaufzeit ($\Delta t_{end}^{M2}$) und Entfernung

($d_{end}^{M2} = L - d_{start}^{M2}$) zwischen Sondenende und zweiter Grenzfläche (18b) bestimmt wird, insbesondere nach der

Rechenvorschrift $\varepsilon_{r2}^{M2} = \left(\frac{c\Delta t_{end}^{M2}}{2d_{end}^{M2}}\right)^2$.

4. Verfahren nach einem der vorhergehenden Ansprüche,

wobei die Entfernung ($d_{start}^{Mn}$) zu einer n-ten Grenzfläche und eine relative Dielektrizitätskonstante ($\varepsilon_r^{Mn}$) eines

die n-te Grenzfläche bildenden n-ten Mediums auf Basis der Entfernung ($d_{start}^{M(n-1)}$) zu der n-1-ten Grenzfläche und

der relativen Dielektrizitätskonstanten ($\varepsilon_{r1}^{M(n-1)}$) des n-1-ten Mediums ein erstes Mal durch Vergleich der Amplitude

($A_{refl}^{Mn}$) des Reflexionssignals an einer n-ten Grenzfläche des n-ten Mediums mit den Amplituden ($A_{refl}^{M1}$) bis

($A_{refl}^{M(n-1)}$) der Reflexionssignale an der ersten bis n-1-ten Grenzfläche und der Referenzamplitude ($A_{start}$), insbesondere unter Verwendung eines Reflexionskoeffizienten $r^{Mn} = \dfrac{A_{refl}^{Mn} r^{M(n-1)}}{A_{start} \prod\limits_{i=1}^{n-1} (r^{Mi} + 1)^2 r^{Mi}}$ nach der Rechenvorschrift $\varepsilon_{r1}^{Mn} = \left(\dfrac{1 - r^{Mn}}{1 + r^{Mn}}\right)^2 \varepsilon_{r1}^{M(n-1)}$, und ein zweites Mal anhand der Signallaufzeit ($\Delta t_{end}^{Mn}$) und Entfernung

($d_{end}^{Mn} = L - d_{start}^{Mn}$) zwischen Sondenende und n-ter Grenzfläche bestimmt wird, insbesondere nach der Rechenvorschrift $\varepsilon_{r2}^{M2} = \left(\dfrac{c\Delta t_{end}^{Mn}}{2d_{end}^{Mn}}\right)^2$.

5. Verfahren nach einem der vorhergehenden Ansprüche,
wobei keine weiteren Grenzflächen gesucht werden, wenn mindestens eines der folgenden Abbruchkriterien erfüllt ist:

    - es wurde eine Maximalanzahl von Grenzflächen (18a-b) gefunden,
    - die größte erkannte und noch keiner Grenzfläche (18a-b) zugeordnete Amplitude in dem Signalverlauf unterschreitet eine Amplitudenschwelle,
    - der Signalverlauf innerhalb eines vorgegebenen Zeitbereich ist vollständig ausgewertet,
    - die von dem Beginn der Sonde (24) bis zu der zuletzt ausgewerteten Grenzfläche aufintegrierte Energie des Signalverlaufs überschreitet eine Energieschwelle.

6. Verfahren nach einem der vorhergehenden Ansprüche,
wobei der Signalverlauf des reflektierten Signals mit einer nichtlinearen Kennlinie verstärkt aufgezeichnet wird, bei der Eingangssignale mittlerer Amplitude überproportional verstärkt werden, wobei mittlere Amplituden **dadurch** definiert sind, dass sie in einem Intervall oberhalb eines Rauschpegels und unterhalb eines Startsignals (42) oder eines Artefakts (48) vom Ende der Sonde (24) als den stärksten zu erwartenden Signale liegen.

7. Verfahren nach einem der vorhergehenden Ansprüche,

wobei der Signalverlauf des reflektierten Signals mit einer nichtlinearen Kennlinie verstärkt aufgezeichnet wird, bei der Eingangssignale kleiner Amplitude und/oder großer Amplitude unterdrückt werden, wobei kleine Amplituden als unterhalb oder in der Nähe eines Rauschpegels und große Amplituden als in der Größenordnung eines Startsignals (42) oder eines Artefakts (48) vom Ende der Sonde (24) definiert sind.

**8.** Verfahren nach Anspruch 6 oder 7,
wobei die Kennlinie für minimale und maximale Eingangssignale flach bei einem Bruchteil maximaler Verstärkung ist, für Eingangssignale um Null bei Null liegt und dazwischen einen sigmoiden Verlauf hat, wobei der sigmoide Verlauf insbesondere durch ein Polynom vorgeschrieben ist, wobei die Anschlussstellen des Polynoms zu den flachen Bereichen zumindest stetig differenzierbar sind.

**9.** Verfahren nach einem der vorhergehenden Ansprüche,
wobei der Signalverlauf zunächst mit diskreten Stützstellen digitalisiert und anschließend stückweise durch eine Schar von Polynomen zweiter Ordnung zwischen je zwei Stützstellen interpoliert wird, wobei die Anschlussstellen zwischen zwei Polynomen stetig differenzierbar sind.

**10.** Verfahren nach einem der vorhergehenden Ansprüche,
wobei zwischen je zwei Stützstellen, in denen die Steigung des Signalverlaufs unterhalb einer ersten Mindeststeigung liegt, anstelle eines Polynoms zweiter Ordnung ein Polynom erster Ordnung für die Interpolation verwendet wird.

**11.** Verfahren nach einem der vorhergehenden Ansprüche,
wobei dann, wenn in der Umgebung einer Stützstelle die Steigung des Signalverlaufs unterhalb einer zweiten Mindeststeigung liegt, die Stützstelle in der weiteren Interpolation unberücksichtigt bleibt.

**12.** Verfahren nach einem der vorhergehenden Ansprüche,
wobei die Signallaufzeiten ($\Delta t_{end}^{Mi}$) anhand der Lage von Maxima in dem Signalverlauf bestimmt werden, wobei zunächst eine steigende Flanke über eine Mindestdauer aufgefunden, dann in einem Zeitfenster (54, 56) um diese steigende Flanke eine fallende Flanke (58) gesucht wird, woraus auf ein Maximum zwischen der steigenden Flanke und der fallenden Flanke (58) geschlossen wird und, sofern es hinter der fallenden Flanke (58) nochmals eine Krümmungsänderung gibt, weitere Maxima innerhalb des Zeitfensters (54, 56) durch erneutes Aufsuchen von steigenden und fallenden Flanken (58) aufgefunden werden, wobei insbesondere die Maxima in einem Durchlauf des Signalsverlaufs von links nach rechts und in einem Durchlauf des Signalverlaufs von rechts nach links ermittelt werden.

**13.** Verfahren nach einem der vorhergehenden Ansprüche,
wobei die genaue Lage der Maxima analytisch aus einer Interpolation des Signalverlaufs ermittelt wird.

**14.** Verfahren nach einem der vorhergehenden Ansprüche,
wobei ein Soll-Signalverlauf aus einer Faltung des Sendesignals mit durch die Amplituden ($A_{refl}^{Mi}$) gewichteten Deltapulsen zu den Zeitpunkten der Signallaufzeiten ($\Delta t_{start}^{Mi}$) gebildet wird und ein Satz optimaler Amplituden ($A_{refl}^{Mi}$) und Signallaufzeiten ($\Delta t_{start}^{Mi}$) **dadurch** gesucht wird, dass der Soll-Signalverlauf von dem Signalverlauf möglichst wenig abweicht, wobei insbesondere die gemessenen Amplituden ($A_{refl}^{Mi}$) und Signallaufzeiten ($\Delta t_{start}^{Mi}$) als Anfangswerte des Optimierungsproblems verwendet werden.

**15.** Sensor (10), insbesondere TDR-Füllstandssensor, mit einem Sender (34) und einem Empfänger (36) zum Aussenden und Empfangen eines elektromagnetischen Signals, insbesondere eines Mikrowellensignals, sowie mit einer Steuerung (32), welche dafür ausgebildet ist, die Entfernung ($d_{start}^{M1}$) zu mindestens einer Grenzfläche (18a) anhand der Laufzeit des an der Grenzfläche (18a) reflektierten Signals sowie eine Dielektrizitätskonstante ($\varepsilon_r^{M1}$) des die Grenzfläche (18a) bildenden Mediums (14a) zu bestimmen, **dadurch gekennzeichnet, dass** die Steuerung (32) dafür ausgebildet ist, die Entfernung ($d_{start}^{M1}$) und die Dielektrizitätskonstante ($\varepsilon_r^{M1}$) mit einem Verfahren nach einem der vorhergehenden Ansprüche zu bestimmen.

**Claims**

1. A method for measuring the distance to at least a first boundary surface (18a) by transmitting an electromagnetic signal along a probe (24), recording the signal course of the reflected signal and determining the distance ($d_{start}^{M1}$) to the first boundary surface (18a) based on a signal time of flight ($\Delta t_{start}^{M1}$), wherein the relative dielectric constant ($\varepsilon_{r1}^{M1}$) of a first medium (14a) forming the first boundary surface (18a) is determined a first time by a comparison of the amplitude ($A_{refl}^{M1}$) of the reflected signal from the first boundary surface (18a) with a reference amplitude ($A_{start}$) of the transmitted signal,
**characterized in that**
the relative dielectric constant ($\varepsilon_{r2}^{M1}$) is determined a second time based on the signal time of flight ($\Delta t_{end}^{M1}$) and the distance ($d_{end}^{M1} = L - d_{start}^{M1}$) between the first boundary surface (18a) and the probe end (L), wherein at a lack of consistency between the two measurements within a tolerance range it is assumed that a further boundary surface (18b) of a further medium (14b) exists along the probe (24).

2. The method according to claim 1,

   wherein the relative dielectric constant is determined at the first time with use of a reflection coefficient $r^{M1} = \dfrac{A_{refl}^{M1}}{A_{start}}$,

   according to the equation $\varepsilon_{r1}^{M1} = \left( \dfrac{1 - r^{M1}}{1 + r^{M1}} \right)^2$ and/or at the second time according to the equation

   $\varepsilon_{r2}^{M1} = \left( \dfrac{c\Delta t_{end}^{M1}}{2 d_{end}^{M1}} \right)^2$.

3. The method according to claim 1 or 2,

   wherein the distance ($d_{start}^{M2}$) to a second boundary surface (18b) and a relative dielectric constant ($\varepsilon_r^{M2}$) of a second medium (14b) forming the second boundary surface (18b) is determined based on the distance ($d_{start}^{M1}$) to the first boundary surface (18a) and the relative dielectric constant ($\varepsilon_{r1}^{M1}$) of the first medium (14a) a first time by a comparison of the amplitude ($A_{refl}^{M2}$) of the reflected signal at the second boundary surface (18b) with the amplitude ($A_{refl}^{M1}$) of the reflected signal at the first boundary surface (18a) and the reference amplitude ($A_{start}$), in particular

   with use of a reflection coefficient $r^{M2} = \dfrac{A_{refl}^{M2}}{A_{Start}(r^{M1}+1)^2}$ according to the equation $\varepsilon_{r1}^{M2} = \left( \dfrac{1 - r^{M2}}{1 + r^{M2}} \right)^2 \varepsilon_{r1}^{M1}$,

   and a second time based on the time of flight ($\Delta t_{end}^{M2}$) and the distance

   ($d_{end}^{M2} = L - d_{start}^{M2}$) between probe end and second boundary surface (18b), in particular according to the equation

$$\varepsilon_{r2}^{M2} = \left( \frac{c\Delta t_{end}^{M2}}{2d_{end}^{M2}} \right)^2 .$$

4. The method according to any of the preceding claims,

wherein the distance ( $d_{start}^{Mn}$ ) to an n$^{th}$ boundary surface and a relative dielectric constant ( $\varepsilon_r^{Mn}$ ) of an n$^{th}$ medium forming the n$^{th}$ boundary surface is determined based on the distance ( $d_{start}^{M(n-1)}$ ) to the (n-1)$^{th}$ boundary surface and the relative dielectric constant ( $\varepsilon_{r1}^{M(n-1)}$ ) of the (n-1)$^{th}$ medium a first time by a comparison of the amplitude

( $A_{refl}^{Mn}$ ) of the reflected signal at an n$^{th}$ boundary surface of the n$^{th}$ medium with the amplitudes ( $A_{refl}^{M1}$ ) to ( $A_{refl}^{M(n-1)}$ )

of the reflected signals at the first to (n-1)$^{th}$ boundary surface and the reference amplitude ($A_{Start}$), in particular with use of a reflection coefficient $r^{Mn} = \dfrac{A_{refl}^{Mn} r^{M(n-1)}}{A_{start} \prod\limits_{i=1}^{n-1} (r^{Mi}+1)^2 r^{Mi}}$ according to the equation

$\varepsilon_{r1}^{Mn} = \left( \dfrac{1-r^{Mn}}{1+r^{Mn}} \right)^2 \varepsilon_{r1}^{M(n-1)}$, and a second time based on the signal time of flight ( $\Delta t_{end}^{Mn}$ ) and the distance

( $d_{end}^{Mn} = L - d_{start}^{Mn}$ ) between probe end and n$^{th}$ boundary surface, in particular according to the equation

$$\varepsilon_{r2}^{M2} = \left( \frac{c\Delta t_{end}^{Mn}}{2d_{end}^{Mn}} \right)^2 .$$

5. The method according to any of the preceding claims,
wherein no further boundary surfaces are located when at least one of the following termination criteria is met:

- a maximum number of boundary surfaces (18a-b) was located;
- the largest detected amplitude in the signal course not yet associated with a boundary surface (18a-b) is below an amplitude threshold,
- the signal course within a preset time interval is completely evaluated,
- the energy of the signal course integrated from the beginning of the probe (24) up to the last evaluated boundary surface exceeds an energy threshold.

6. The method according to any of the preceding claims,
wherein the signal course of the reflected signal is recorded with an amplification with a nonlinear characteristic curve that disproportionately amplifies input signals of medium amplitude, wherein medium amplitudes are defined in that they are in an interval above a noise level and below a start signal (42) or an artifact (48) from the probe end (24) that are the strongest expected signals.

7. The method according to any of the preceding claims,
wherein the signal course of the reflected signal is recorded with an amplification with a nonlinear characteristic curve that suppresses input signals of small amplitude and/or large amplitude, wherein small amplitudes are defined as below or near a noise level and large amplitudes are defined as being of an order of magnitude with a start signal (42) or an artifact (48) from the probe end (24).

8. The method according to claim 6 or 7,
wherein the characteristic curve is flat at a fraction of the maximum gain for minimal and maximal input signals, is zero for input signals near zero, and has a sigmoidal shape in between, wherein the sigmoidal shape is in particular prescribed by a polynom, wherein the connections of the polynom to the flat regions are at least continuously differentiable.

9. The method according to any of the preceding claims,
wherein the signal course is at first digitized with discrete sampling points and subsequently piecewise interpolated by a set of second order polynoms between two respective sampling points, wherein the connections between two polynoms are continuously differentiable.

10. The method according to any of the preceding claims,
wherein between each two sampling points in which the slope of the signal course is below a first minimum slope a first order polynom is used instead of a second order polynom for the interpolation.

11. The method according to any of the preceding claims,
wherein, when in a vicinity of a sampling point the slope of the signal curve is below a second minimum slope, the sampling point is disregarded in the further interpolation.

12. The method according to any of the preceding claims,
wherein the signal times of flight ( $\Delta t_{end}^{Mi}$ ) are determined based on the position of maxima in the signal course, wherein at first a rising edge over a minimum duration is located, subsequently a falling edge (58) is located in a time window (54, 56) around the rising edge, from which it is concluded that there is a maximum between the rising edge and the falling edge (58), and, if there is another change in curvature after the falling edge (58), further maxima within the time window (54, 56) are located by again locating rising and falling edges (58), wherein in particular the maxima are determined in a run through the signal course from left to right and in a run through the signal curve from right to left.

13. The method according to any of the preceding claims,
wherein the precise position of the maxima is determined analytically from an interpolation of the signal course.

14. The method according to any of the preceding claims,
wherein a desired signal course is formed from a convolution of the transmission signal with delta pulses weighted with the amplitudes ( $A_{refl}^{Mi}$ ) at the times of the signal times of flight ( $\Delta t_{start}^{Mi}$ ), and a set of optimal amplitudes ( $A_{refl}^{Mi}$ ) and signal times of flight ( $\Delta t_{start}^{Mi}$ ) is found by the desired signal course deviating from the signal course as little as possible, wherein in particular the common amplitudes ( $A_{refl}^{Mi}$ ) and the signal times of flight ( $\Delta t_{start}^{Mi}$ ) are used as initial values of the optimization problem.

15. A sensor (10), in particular a TDR level sensor, comprising a transmitter (34) and a receiver (36) for the transmission and reception of an electromagnetic signal, in particular a micro wave signal, and with a control (32) that is configured to determine the distance ( $d_{start}^{M1}$ ) to at least one boundary surface (18a) based on a time of flight of the signal reflected at the boundary surface (18a) and to determine a dielectric constant ( $\varepsilon_r^{M1}$ ) of the medium (14a) forming the boundary surface (18a),
**characterized in that**
the control (32) is configured to determine the distance ( $d_{start}^{M1}$ ) and the dielectric constant ( $\varepsilon_r^{M1}$ ) with a method according to one of the preceding claims.

**Revendications**

1. Procédé pour la mesure de la distance par rapport à au moins une première surface limite (18a) par émission d'un signal électromagnétique le long d'une sonde (24), enregistrement de l'évolution du signal réfléchi et détermination de la distance ( $d_{start}^{M1}$ ) jusqu'à la première surface limite (18a) au moyen du temps de parcours du signal ( $\Delta t_{start}^{M1}$ ),

dans lequel la constante de diélectrique relative ( $\varepsilon_{r1}^{M1}$ ) d'un premier milieu (14a) formant la première surface limite (18a) est déterminé une première fois par comparaison de l'amplitude ( $A_{refl}^{M1}$ ) du signal réfléchi au niveau de la première surface limite (18a) avec une amplitude de référence ($A_{start}$) du signal émis,

**caractérisé en ce que**

la constante diélectrique relative ($\varepsilon_{r2}^{M1}$) est déterminée une seconde fois au moyen du temps de parcours du signal ($\Delta t_{end}^{M1}$) et de la distance ($d_{end}^{M1} = L - d_{start}^{M1}$) entre la première surface limite (18a) et l'extrémité L de la sonde, dans lequel en absence de coïncidence des deux mesures à l'intérieur d'une plage de tolérance, en suppose qu'au moins une autre surface limite (18b) d'un autre milieu (14b) se trouve le long de la sonde (24).

2. Procédé selon la revendication 1,
dans lequel la constante diélectrique relative est déterminée lors de la première fois en utilisant un coefficient de réflexion $r^{M1} = \dfrac{A_{refl}^{M1}}{A_{start}}$ d'après

la règle de calcul $\varepsilon_{r1}^{M1} = \left(\dfrac{1 - r^{M1}}{1 + r^{M1}}\right)^2$ et/ou lors de la seconde fois d'après la règle de calcul $\varepsilon_{r2}^{M1} = \left(\dfrac{c\Delta t_{end}^{M1}}{2d_{end}^{M1}}\right)^2$.

3. Procédé selon la revendication 1 ou 2,
dans lequel la distance ($d_{start}^{M2}$) à une seconde surface limite (18b) et une constante diélectrique relative ($\varepsilon_{r}^{M2}$) d'un second milieu (14b) formant la seconde surface limite (18b) sont déterminés en se basant sur la distance ($d_{start}^{M1}$) à la première surface limite (18a) et sur la constante diélectrique relative ($\varepsilon_{r1}^{M1}$) du premier milieu (14a) une première fois par comparaison de l'amplitude ($A_{refl}^{M2}$) du signal réfléchi au niveau de la seconde surface limite (18b) avec l'amplitude ($A_{refl}^{M1}$) du signal réfléchi au niveau de la première surface limite (18a) et de l'amplitude de référence ($A_{start}$), en particulier en utilisant un coefficient de réflexion $r^{M2} = \dfrac{A_{refl}^{M2}}{A_{Start}(r^{M1} + 1)^2}$ d'après la règle

de calcul $\varepsilon_{r1}^{M2} = \left(\dfrac{1 - r^{M2}}{1 + r^{M2}}\right)^2 \varepsilon_{r1}^{M1}$, et une seconde fois au moyen du temps de parcours du signal ($\Delta t_{end}^{M2}$), et

de la distance ($d_{end}^{M2} = L - d_{start}^{M2}$) entre l'extrémité de la sonde et la seconde surface limite (18b), en particulier d'après la règle de calcul $\varepsilon_{r2}^{M2} = \left(\dfrac{c\Delta t_{end}^{M2}}{2d_{end}^{M2}}\right)^2$.

4. Procédé selon l'une des revendications précédentes,
dans lequel la distance ($d_{start}^{Mn}$) à une n-ième surface limite et une constante diélectrique relative ($\varepsilon_{r}^{Mn}$) d'un n-ième milieu formant la n-ième surface limite sont déterminés en se basant sur la distance ($d_{start}^{M(n-1)}$) à la n-1-ième surface limite et sur la constante diélectrique relative ($\varepsilon_{r1}^{M(n-1)}$) du n-1-ième milieu une première fois par comparaison de l'amplitude ($A_{refl}^{Mn}$) du signal réfléchi au niveau d'une n-ième surface limite du n-ième milieu avec les amplitudes ($A_{refl}^{M1}$) à ($A_{refl}^{M(n-1)}$) des signaux réfléchis au niveau de la première à la n-1-ième surfaces limites et avec l'amplitude de référence ($A_{start}$), en particulier en utilisant un coefficient de réflexion $r^{Mn} = \dfrac{A_{refl}^{Mn} r^{M(n-1)}}{A_{start} \displaystyle\prod_{i=1}^{n-1}(r^{Mi} + 1)^2 r^{Mi}}$ d'après la règle de calcul $\varepsilon_{r1}^{Mn} = \left(\dfrac{1 - r^{Mn}}{1 + r^{Mn}}\right)^2 \varepsilon_{r1}^{M(n-1)}$ , et une seconde fois au moyen du temps de parcours du signal

( $\Delta t_{end}^{Mn}$ ) et de la distance ( $d_{end}^{Mn} = L - d_{start}^{Mn}$ ) entre l'extrémité de la sonde et la n-ième surface limite, en particulier d'après la règle de calcul $\varepsilon_{r2}^{M2} = \left(\dfrac{c\Delta t_{end}^{Mn}}{2d_{end}^{Mn}}\right)^2$ .

**5.** Procédé selon l'une des revendications précédentes,
dans lequel on ne cherche aucune autre surface limite quand l'un au moins des critères d'abandon suivant est rempli :

- on a trouvé un nombre maximum de surfaces limite (18a-b),
- la plus grande amplitude reconnue qui n'est pas encore attribuée à une surface limite (18a-b) dans l'évolution du signal passe au-dessous d'un seuil d'amplitude,
- l'évolution du signal à l'intérieur d'une plage temporelle prédéterminée est entièrement évaluée,
- l'énergie, intégrée depuis le commencement de la sonde (24) jusqu'à la surface limite évaluée en dernier lieu, de l'évolution du signal passe au-dessus d'un seuil d'énergie.

**6.** Procédé selon l'une des revendications précédentes,
dans lequel l'évolution du signal réfléchi est enregistrée de manière amplifiée avec une courbe caractéristique non linéaire, dans laquelle les signaux d'entrée d'amplitude moyenne sont amplifiés de manière surproportionnelle, les amplitudes moyennes étant définies par le fait qu'elles sont situées dans un intervalle au-dessus d'un niveau de bruit et au-dessous d'un signal de départ (42) ou d'un artefact (48) de l'extrémité de la sonde (24) comme étant le signal attendu le plus fort.

**7.** Procédé selon l'une des revendications précédentes,
dans lequel l'évolution du signal réfléchi est enregistrée de manière amplifiée avec une courbe caractéristique non linéaire, dans laquelle les signaux d'entrée de petite amplitude et/ou de grande amplitude sont supprimés, les petites amplitudes étant définies comme étant au-dessous ou au voisinage d'un niveau de bruit, et les grandes amplitudes étant définies comme ayant l'ordre de grandeur d'un signal de départ (42) ou d'un artefact (48) de l'extrémité de la sonde (24).

**8.** Procédé selon la revendication 6 ou 7,
dans lequel la courbe caractéristique pour des signaux d'entrée minimum et maximum est aplatie sur une portion d'amplitude maximum, est à zéro pour des signaux d'entrée voisins de zéro, et présente entre ceux-ci une évolution sigmoïde, ladite évolution sigmoïde étant en particulier imposée par un polynôme, les emplacements de jonction du polynôme vers les régions aplaties étant susceptible d'être dérivées, au moins en continu.

**9.** Procédé selon l'une des revendications précédentes,
dans lequel l'évolution du signal est numérisée tout d'abord avec des emplacements de soutien discrets, et est ensuite interpolée morceau par morceau par une famille de polynômes de second ordre entre deux emplacements de soutien respectifs, lesdits emplacements de jonction entre deux polynômes étant susceptibles d'être dérivés en continu.

**10.** Procédé selon l'une des revendications précédentes,
dans lequel, entre deux emplacements de soutien respectifs dans lesquelles la pente de l'évolution du signal est inférieure à une première pente minimum, on utilise pour l'interpolation un polynôme de premier ordre à la place d'un polynôme de second ordre.

**11.** Procédé selon l'une des revendications précédentes,
dans lequel, si dans les environs d'un emplacement de soutien la pente de l'évolution du signal est inférieure à une seconde pente minimum, l'emplacement de soutien reste sans être pris en compte dans la suite de l'interpolation.

**12.** Procédé selon l'une des revendications précédentes,

dans lequel les temps de parcours du signal ( $\Delta t_{end}^{Mi}$ ) sont déterminés au moyen de la situation des maxima dans l'évolution du signal, de sorte que trouve tout d'abord un flanc montant sur une durée minimum, on recherche ensuite dans une fenêtre temporelle (54, 56) autour de ce flanc montant un flanc descendant (58), à partir de quoi on conclut qu'il y a un maximum entre le flanc montant et le flanc descendant (58), dans la mesure où il existe derrière le flanc descendant (58) encore une fois une variation de courbure, on trouve d'autres maxima à l'intérieur de la fenêtre temporelle (54, 56) par une nouvelle recherche de flanc montant et de flanc descendant (58), dans lequel les maxima sont en particulier déterminés dans un passage de l'évolution du signal de la gauche vers la droite et dans un passage de l'évolution du signal de la droite vers la gauche.

**13.** Procédé selon l'une des revendications précédentes,
dans lequel la situation exacte des maxima est déterminée de manière analytique à partir d'une interpolation de l'évolution du signal.

**14.** Procédé selon l'une des revendications précédentes,
dans lequel on forme une évolution de consigne du signal à partir d'une convolution du signal émis avec des impulsions delta pondérées par les amplitudes ( $A_{refl}^{Mi}$ ) aux instants des temps de parcours ( $\Delta t_{start}^{Mi}$ ) du signal, et l'on recherche un groupe d'amplitudes ( $A_{refl}^{Mi}$ ) optimales et de temps de parcours ( $\Delta t_{start}^{Mi}$ ) optimaux du signal grâce au fait que l'évolution de consigne du signal s'écarte le moins possible de l'évolution du signal, et en particulier les amplitudes mesurées ( $A_{refl}^{Mi}$ ) et les temps de parcours ( $\Delta t_{start}^{Mi}$ ) du signal sont utilisés à titre de valeurs de départ du problème d'optimisation.

**15.** Capteur (10), en particulier capteur de niveau TDR, comprenant un émetteur (34) et un récepteur (36) pour émettre et recevoir un signal électromagnétique, en particulier un signal à micro-ondes, et comprenant une commande (32) qui est réalisée pour déterminer la distance ( $d_{start}^{M1}$ ) à au moins une surface limite (18a) au moyen du temps de parcours du signal réfléchi au niveau de la surface limite (18a), et au moins une constante diélectrique ( $\varepsilon_r^{M1}$ ) du milieu (14a) formant la surface limite (18a), **caractérisé en ce que** la commande (32) est réalisée pour déterminer la distance ( $d_{start}^{M1}$ ) et la constante diélectrique ( $\varepsilon_r^{M1}$ ) avec un procédé selon l'une des revendications précédentes.

## Figur 1

Echokurve

## Figur 2

## Figur 3

## Figur 4

momentane Leistung der Echokurve

## Figur 5

## Figur 6

## Figur 7

## Figur 8

## Figur 9

Echokurve und sinc(x)-Interpolation

## Figur 10

Echokurve und sinc(x)-Interpolation

## Figur 11

50

Echokurve und Spline-Interpolation

Amplitude

° ADC-Werte
—— Spline-Interpolation
····· stückweise quadratische Interpolation

Zeit [ns]

## Figur 12

50

Vergleich: stückweise quadratische- und Spline-Interpolation

Amplitude

° ADC-Werte
—— Spline-Interpolation
····· stückweise quadratische Interpolation

Zeit [ns]

## Figur 13

**Vergleich: stückweise quadratisch/lineare- und Spline-Interpolation**

○ ADC-Werte
—— Spline-Interpolation
······ stückweise quadratisch/lineare Interpolation

Zeit [ns]

## Figur 14

**Vergleich: stückweise quadratisch/lineare- und Spline-Interpolation**

○ ADC-Werte
—— Spline-Interpolation
······ stückweise quadratisch/lineare Interpolation

Zeit [ns]

## Figur 15

stückweise adaptive Interpolation mit nicht-linearen Stützstellen

## Figur 16

stückweise adaptive Interpolation mit nicht-linearen Stützstellen

# Figur 17

stückweise adaptive Interpolation mit nicht-linearen Stützstellen

○ ADC-Werte
······stückweise adaptive Interpolation

# Figur 18

Sonderfall 1

nicht-lineare Signalverarbeitung: Sonderfall 1

Sonderfall 2

nicht-lineare Signalverarbeitung: Sonderfall 2

Sonderfall 3

nicht-lineare Signalverarbeitung: Sonderfall 3

Abtastwerte

Abtastwerte

# Figur 19

# Figur 20

## Figur 21

**Sonderfall 1**

**Sonderfall 2**

**Sonderfall 3**

Zeit [ps]

## Figur 22

**Sonderfall 1**

**Sonderfall 2**

**Sonderfall 3**

Zeit [ps]

## Figur 23

## Figur 24

## Figur 25

Sonderfall 1: Lösung des Optimierungsproblems

## Figur 26
## (Stand der Technik)

Figur 27
(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6724197 B2
- US 5723979 A
- US 6445192 B1
- EP 2154495 A2
- US 5140236 A
- US 20080143583 A1